# EUROPEAN PATENT APPLICATION

(11) **EP 4 765 026 A1**
(43) Date of publication of application: **24.06.2026**
(21) Application number: 24915104.4
(22) Date of filing: 17.12.2024
(51) Int. Cl.: G06T 15/00

(54) **VERTICAL SYNCHRONIZATION SIGNAL-BASED IMAGE PROCESSING METHOD, ELECTRONIC DEVICE AND STORAGE MEDIUM**

(30) Priority: 02.01.2024 CN 202410009794
(71) Applicant: Honor Device Co., Ltd., Shenzhen, Guangdong 518040 (CN)
(72) Inventor: CHENG, Long, Shenzhen, Guangdong 518040 (CN)
(74) Representative: Isarpatent
(86) International application number: PCT/CN2024/140082
(87) International publication number: WO 2025/145889

(57) **Abstract**

This application relates to the field of image processing and display technologies, and provides a vertical synchronization signal-based image processing method, an electronic device, and a storage medium. The method includes: An electronic device draws and renders a first layer in response to a first vertical synchronization signal, and buffers the first layer in a first buffer queue at a first moment. If the first moment is after a second vertical synchronization signal, and a first image frame to be refreshed and displayed does not exist at a third vertical synchronization signal, the electronic device immediately triggers layer composition on the first layer at the first moment, to obtain a second image frame. The second vertical synchronization signal is after the first vertical synchronization signal and is separated from the first vertical synchronization signal by a first preset period, and the third vertical synchronization signal is after the second vertical synchronization signal and is separated from the second vertical synchronization signal by a second preset period. Therefore, composition is triggered immediately when drawing of the first layer is delayed and the second image frame may be refreshed and displayed at the corresponding third vertical synchronization signal. This can avoid a frame loss and ensure smoothness of image display.

## Description

This application claims priority to Chinese Patent Application No. 202410009794.1, filed with the China National Intellectual Property Administration on January 2, 2024 and entitled "VERTICAL SYNCHRONIZATION SIGNAL-BASED IMAGE PROCESSING METHOD, ELECTRONIC DEVICE, AND STORAGE MEDIUM", which is incorporated herein by reference in its entirety.

### TECHNICAL FIELD

Embodiments of this application relate to the field of image processing and display technologies, and in particular, to a vertical synchronization signal-based image processing method, an electronic device, and a storage medium.

### BACKGROUND

With development of electronic technologies, performance of various electronic devices (for example, mobile phones) becomes better. Consumers have higher requirements for human-machine interaction performance of electronic products. Visual coherence of display content of an electronic device for a user is important human-machine interaction performance.

Currently, ensuring that a display picture of the electronic device loses no frame is one of prerequisites for ensuring coherence of images displayed by the electronic device. However, in an existing application thread, a frame loss may be caused because drawing and rendering consume a too long time, which affects smoothness of images displayed on a display. Consequently, visual experience of the user is poor.

### SUMMARY

Embodiments of this application provide a vertical synchronization signal-based image processing method, an electronic device, and a storage medium, to resolve a problem of a frame loss in a picture displayed by an electronic device, and ensure smoothness of image display.

To achieve the foregoing objective, the following technical solutions are used in the embodiments of this application:

According to a first aspect, a vertical synchronization signal-based image processing method is provided, and is applied to an electronic device. A vertical synchronization signal includes a first vertical synchronization signal used to trigger drawing, a second vertical synchronization signal used to trigger layer composition, and a third vertical synchronization signal of a user for triggering refreshing and display. The second vertical synchronization signal is after the first vertical synchronization signal and is separated from the first vertical synchronization signal by a first preset period, and the third vertical synchronization signal is after the second vertical synchronization signal and is separated from the second vertical synchronization signal by a second preset period. That is, the third vertical synchronization signal is after the first vertical synchronization signal, and a period separating the third vertical synchronization signal and the first vertical synchronization signal is a sum of the first preset period and the second preset period. The method includes:

When the first vertical synchronization signal arrives, the electronic device draws and renders a first layer of a first application in response to the first vertical synchronization signal, and buffers the drawn and rendered first layer in a first buffer queue at a first moment. Then, if the first moment at which the first layer is buffered is after the second vertical synchronization signal, and a first image frame to be refreshed and displayed does not exist at the third vertical synchronization signal, the electronic device immediately triggers layer composition on the first layer in the first buffer queue at the first moment, to obtain a second image frame, and buffers the second image frame in a second buffer queue.

It can be learned that, in the first aspect, when the electronic device times out drawing and rendering the first layer in response to the first vertical synchronization signal, and the first image frame to be refreshed and displayed does not exist at the corresponding third vertical synchronization signal, in other words, the first moment is after the second vertical synchronization signal, and consequently, the first layer misses the second vertical synchronization signal used for layer composition, but does not miss the corresponding third vertical synchronization signal, the electronic device in this application immediately triggers layer composition on the first image. In this way, a frame loss can be avoided when drawing and rendering time out, to ensure smoothness of image display.

In a possible implementation of the first aspect, because drawing and rendering of the first layer time out, the third vertical synchronization signal may be missed. In this case, even if the first layer is immediately composed, the corresponding second image frame cannot be refreshed or displayed at the third vertical synchronization signal, causing a frame loss. Therefore, in this case, the second image frame may be refreshed and displayed in advance, to reduce impact of the frame loss as much as possible.

To be specific, the vertical synchronization signal-based image processing method may further include: refreshing and displaying the second image frame in the second buffer queue at a picture refreshing moment if the first moment is after the third vertical synchronization signal. The picture refreshing moment is after the third vertical synchronization signal and before a fourth vertical synchronization signal, the fourth vertical synchronization signal is used to trigger image frame display, and the fourth vertical synchronization signal is after the third vertical synchronization signal and is separated from the third vertical synchronization signal by one synchronization period. Therefore, after the third vertical synchronization signal is missed, the second image frame is refreshed in advance between the fourth vertical synchronization signal as much as possible, and display of the second image frame is delayed, to reduce impact of the frame loss as much as possible.

In another possible implementation of the first aspect, if the first moment is before the third vertical synchronization signal, usually, the electronic device may normally refresh and display the second image frame when the third vertical synchronization signal arrives. Therefore, the vertical synchronization signal-based image processing method may further include: if the first moment is before the third vertical synchronization signal, the electronic device refreshes and displays the second image frame in the second buffer queue in response to the third vertical synchronization signal.

In a possible implementation of the first aspect, the picture refreshing moment may be determined based on a predetermined frame rate. The predetermined frame rate is greater than a frame rate of a display of the electronic device. Further, a quantity of picture refreshing moments determined based on the predetermined frame rate is greater than a quantity of picture refreshing moments determined based on the frame rate of the display, and the picture refreshing moments determined based on the predetermined frame rate are more compact than the picture refreshing moments determined based on the frame rate of the display. In this way, it is ensured that the second image frame can be refreshed in advance.

In a possible implementation of the first aspect, the second image frame is buffered in the second buffer queue at a second moment. Generally, it is possible that refreshing or displaying cannot be performed at the third vertical synchronization signal due to timeout of layer composition in addition to timeout of drawing and rendering of the first layer. In other words, refreshing or displaying cannot be performed either at the third vertical synchronization signal when the second moment is after the third vertical synchronization signal, causing a frame loss.

Therefore, to avoid a frame loss in this case, the vertical synchronization signal-based image processing method may further include: refreshing and displaying the second image frame in the second buffer queue at a picture refreshing moment if the second moment is after the third vertical synchronization signal. In this aspect, the picture refreshing moment is also after the third vertical synchronization signal and before the fourth vertical synchronization signal. In addition, the picture refreshing moment may also be determined based on a predetermined frame rate greater than a frame rate of a display. Details are not described herein again.

In a possible implementation of the first aspect, there are usually a plurality of picture refreshing moments. Therefore, to ensure that the second image frame can be successfully refreshed and displayed in advance, the second image frame may be refreshed and displayed in advance by traversing the picture refreshing moments. Therefore, the picture refreshing moment may include a first refreshing moment and at least one second refreshing moment, and the second refreshing moment is after the first refreshing moment. Based on this, the refreshing and displaying the second image frame in the second buffer queue at a picture refreshing moment may include: refreshing and displaying the second image frame in the second buffer queue at a 1^{st} picture refreshing moment; and if refreshing and display fail at the 1^{st} picture refreshing moment, traversing the at least one second picture refreshing moment in a time sequence, and refreshing and displaying the second image frame at each second picture refreshing moment, until the refreshing and display succeed or traversal is completed.

In a possible implementation of the first aspect, for whether the first image frame to be refreshed and displayed exists at the third vertical synchronization signal, where may have two cases: One is that the second vertical synchronization signal is responded to with a case in which a first image frame is being composed. The other is that the first image frame to be refreshed and displayed exists in the second buffer queue.

Due to both of the foregoing two cases, the first image frame is refreshed and displayed at the third vertical synchronization signal before the second image frame, and consequently, the second image frame is delayed to be refreshed and displayed at the fourth vertical synchronization signal, causing a frame loss.

Therefore, if the electronic device does not perform layer composition in response to the second vertical synchronization signal, and the first image frame to be refreshed and displayed does not exist in the second buffer queue at the first moment, the electronic device may determine that the first image frame to be refreshed and displayed does not exist at the third vertical synchronization signal.

In another possible implementation of the first aspect, if the first moment is before the second vertical synchronization signal, it indicates that the third vertical synchronization signal is not missed. Therefore, the electronic device may normally wait for the second vertical synchronization signal to arrive, and then, perform layer composition on the first layer in the first buffer queue in response to the second vertical synchronization signal, to obtain the second image frame, and buffer the second image frame in the second buffer queue. Similarly, the electronic device may normally wait for the third vertical synchronization signal to arrive, and then, refresh and display the second image frame in the second buffer queue in response to the third vertical synchronization signal.

In a possible implementation of the first aspect, layer composition requires a period of processing time. Therefore, even if the first moment coincides with the second vertical synchronization signal, the third vertical synchronization signal may be missed because layer composition requires the processing time. Further, to avoid this case as much as possible, in this aspect, even if the first moment is before the second vertical synchronization signal, provided that a time difference between the first moment and the second vertical synchronization signal is less than or equal to a preset time threshold, it may be considered that the first moment is after the second vertical synchronization signal.

According to a second aspect, this application provides an electronic device, including: one or more processors and a memory. The memory is coupled to the processor, the memory stores one or more pieces of computer program code, the computer program code includes computer instructions, and when the processor executes the computer instructions, the electronic device is enabled to perform the following steps:
drawing and rendering a first layer of a first application in response to a first vertical synchronization signal, and buffering the first layer in a first buffer queue at a first moment; and if the first moment is after a second vertical synchronization signal, and a first image frame to be refreshed and displayed does not exist at a third vertical synchronization signal, performing layer composition on the first layer in the first buffer queue at the first moment, to obtain a second image frame, and buffering the second image frame in a second buffer queue.

The second vertical synchronization signal is used to trigger layer composition, and the second vertical synchronization signal is after the first vertical synchronization signal and is separated from the first vertical synchronization signal by a first preset period; and the third vertical synchronization signal is used to trigger image frame refreshing and displaying, and the third vertical synchronization signal is after the second vertical synchronization signal and is separated from the second vertical synchronization signal by a second preset period.

In a possible implementation of the second aspect, when the computer instructions are executed by the processor, the electronic device is enabled to further perform the following step: if the first moment is before the third vertical synchronization signal, refreshing and displaying the second image frame in the second buffer queue in response to the third vertical synchronization signal.

In a possible implementation of the second aspect, when the computer instructions are executed by the processor, the electronic device is enabled to further perform the following step: refreshing and displaying the second image frame in the second buffer queue at a picture refreshing moment if the first moment is after the third vertical synchronization signal. The picture refreshing moment is after the third vertical synchronization signal and before a fourth vertical synchronization signal, the fourth vertical synchronization signal is used to trigger image frame display, and the fourth vertical synchronization signal is after the third vertical synchronization signal and is separated from the third vertical synchronization signal by one synchronization period.

In a possible implementation of the second aspect, when the computer instructions are executed by the processor, the electronic device is enabled to further perform the following step: determining the picture refreshing moment based on a predetermined frame rate. The predetermined frame rate is greater than a frame rate of a display of the electronic device.

In a possible implementation of the second aspect, when the computer instructions are executed by the processor, the electronic device is enabled to further perform the following step: refreshing and displaying the second image frame in the second buffer queue at a picture refreshing moment if the second moment is after the third vertical synchronization signal. The picture refreshing moment is after the third vertical synchronization signal and before a fourth vertical synchronization signal, and the picture refreshing moment is determined based on a predetermined frame rate.

In a possible implementation of the second aspect, the picture refreshing moment includes a first refreshing moment and at least one second refreshing moment, and the second refreshing moment is after the first refreshing moment. When the computer instructions are executed by the processor, the electronic device is enabled to further perform the following steps: refreshing and displaying the second image frame in the second buffer queue at a 1^{st} picture refreshing moment; and if refreshing and display fail at the 1^{st} picture refreshing moment, traversing the at least one second picture refreshing moment in a time sequence, and refreshing and displaying the second image frame at each second picture refreshing moment, until the refreshing and display succeed or traversal is completed.

In a possible implementation of the second aspect, when the computer instructions are executed by the processor, the electronic device is enabled to further perform the following step: if layer composition is not performed in response to the second vertical synchronization signal, and the first image frame to be refreshed and displayed does not exist in the second buffer queue at the first moment, determining that the first image frame to be refreshed and displayed does not exist at the third vertical synchronization signal.

In a possible implementation of the second aspect, when the computer instructions are executed by the processor, the electronic device is enabled to further perform the following steps: if the first moment is before the second vertical synchronization signal, performing layer composition on the first layer in the first buffer queue in response to the second vertical synchronization signal, to obtain the second image frame, and buffering the second image frame in the second buffer queue; and refreshing and displaying the second image frame in the second buffer queue in response to the third vertical synchronization signal.

In a possible implementation of the second aspect, when the computer instructions are executed by the processor, the electronic device is enabled to further perform the following step: if the first moment is before the second vertical synchronization signal, and a time difference between the first moment and the second vertical synchronization signal is less than or equal to a preset time threshold, determining that the first moment is after the second vertical synchronization signal.

According to a third aspect, this application provides a computer-readable storage medium. The computer-readable storage medium stores a computer program, and when the computer program is executed by a processor of an electronic device, the electronic device is enabled to perform the vertical synchronization signal-based image processing method according to the first aspect and any possible implementation of the first aspect.

According to a fourth aspect, this application provides a computer program product. When the computer program product runs on a computer, the computer is enabled to perform the vertical synchronization signal-based image processing method according to the first aspect and any possible implementation of the first aspect. The computer may be the foregoing electronic device.

It may be understood that, for beneficial effects that can be achieved by the electronic device according to any one of possible implementations of the second aspect, the computer-readable storage medium according to the third aspect, and the computer program product according to the fourth aspect provided above, refer to the beneficial effects in the first aspect and any possible implementation of the first aspect. Details are not described herein again.

### BRIEF DESCRIPTION OF DRAWINGS

FIG. 1A is a schematic diagram of a vertical synchronization signal according to an embodiment of this application;
FIG. 1B is a schematic diagram of another vertical synchronization signal according to an embodiment of this application;
FIG. 2 is a diagram of a software processing procedure in which an electronic device displays an image in response to a touch operation according to an embodiment of this application;
FIG. 3 is a schematic principle diagram of layer drawing, rendering, and composition, and image frame display according to an embodiment of this application;
FIG. 4 is a schematic principle diagram of layer production and consumption of an electronic device according to an embodiment of this application;
FIG. 5 is a schematic diagram of a change of a layer in a first buffer queue in a process in which an electronic device performs layer drawing, rendering, and composition, and image frame refreshing and display according to an embodiment of this application;
FIG. 6 is a schematic diagram 1 of a frame loss of an image frame according to an embodiment of this application;
FIG. 7 is a flowchart 1 of a vertical synchronization signal-based image processing method according to an embodiment of this application;
FIG. 8 is a schematic diagram 2 of a frame loss of an image frame according to an embodiment of this application;
FIG. 9 is a schematic diagram 3 of a frame loss of an image frame according to an embodiment of this application;
FIG. 10A and FIG. 10B are a flowchart 2 of a vertical synchronization signal-based image processing method according to an embodiment of this application;
FIG. 11 is a schematic diagram of refreshing and displaying an image frame in advance at a picture refreshing moment according to an embodiment of this application;
FIG. 12 is a schematic diagram 4 of a frame loss of an image frame according to an embodiment of this application;
FIG. 13 is a schematic diagram of refreshing and displaying an image frame in advance at another picture refreshing moment according to an embodiment of this application;
FIG. 14A and FIG. 14B are a flowchart 3 of a vertical synchronization signal-based image processing method according to an embodiment of this application;
FIG. 15 is a schematic diagram of a change of an image frame in a second buffer queue in a process in which an electronic device performs layer drawing, rendering, and composition, and image frame refreshing and display according to an embodiment of this application;
FIG. 16 is a schematic diagram of a structure of an electronic device according to an embodiment of this application; and
FIG. 17 is a schematic diagram of a structure of a chip system according to an embodiment of this application.

### DESCRIPTION OF EMBODIMENTS

The following clearly and completely describes the technical solutions in the embodiments of this application with reference to the accompanying drawings in the embodiments of this application. In the description of the embodiments of this application, terms used in the following embodiments are merely intended to describe particular embodiments, and are not intended to limit this application.

In addition, for ease of clearly describing the technical solutions in the embodiments of this application, in the embodiments of this application, words such as "first" and "second" are used to distinguish between same items or similar items whose functions and roles are basically the same. A person skilled in the art may understand that the terms "first", "second", and the like do not limit a quantity and an execution order, and the terms "first", "second", and the like do not indicate a definite difference. In the description of the embodiments of this application, unless otherwise specified, "a plurality of" means two or more.

An embodiment of this application provides a vertical synchronization signal-based image processing method. The method may be applied to an electronic device including a display (for example, a touchscreen). According to the method, a possibility that a frame loss occurs when the electronic device displays an image can be reduced, and smoothness of images displayed on the display is ensured, to improve visual experience of a user.

Further, if the frame loss cannot be avoided, the electronic device can reduce impact of the frame loss on picture display according to this method, and ensure smoothness of picture display as much as possible, to improve visual experience of the user.

For example, the electronic device may be at least one of devices including a display (for example, a touchscreen) such as a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart house device, or a smart city device.

It may be understood that a specific type of the electronic device is not specifically limited in this embodiment of this application.

For ease of solution understanding, the following briefly describes a vertical synchronization signal in the art. In embodiments of this application, the vertical synchronization signal includes a vertical synchronization signal 1 (corresponding to a first vertical synchronization signal), a vertical synchronization signal 2 (corresponding to a second vertical synchronization signal), and a vertical synchronization signal 3 (corresponding to a third vertical synchronization signal).

The vertical synchronization signal 1 is, for example, a VSYNC_APP signal. The vertical synchronization signal 1 may be used to trigger drawing of one or more layers and render the drawn layer. In other words, the vertical synchronization signal 1 may be used to trigger a UI thread to draw one or more layers, and a Render thread renders the one or more layers drawn by the UI thread. In embodiments of this application, the vertical synchronization signal 1 (for example, the VSYNC_APP signal) is the first vertical synchronization signal.

The vertical synchronization signal 2 is, for example, a VSYNC_SF signal. The vertical synchronization signal 2 may be used to trigger layer composition of one or more rendered layers, to obtain an image frame. In other words, the vertical synchronization signal 2 may be used to trigger a compositor thread to perform layer composition on one or more layers rendered by the Render thread, to obtain an image frame. In embodiments of this application, the vertical synchronization signal 2 (for example, the VSYNC_SF signal) is the second vertical synchronization signal.

The vertical synchronization signal 3 is, for example, an HW_VSYNC signal (also referred to as a VSYNC_TE signal). The vertical synchronization signal 3 may be used to trigger hardware to refresh and display an image frame. In embodiments of this application, the vertical synchronization signal 3 (for example, the HW_VSYNC signal or the VSYNC_TE signal) is the third vertical synchronization signal.

The vertical synchronization signal 3 is a hardware signal triggered by a driver of a display of an electronic device. In embodiments of this application, a signal period T3 of the vertical synchronization signal 3 is determined based on a screen refresh rate of the display of the electronic device.

Specifically, the signal period T3 of the vertical synchronization signal 3 is a reciprocal of the screen refresh rate of the display (for example, which may be an LCD or an OLED) of the electronic device. The screen refresh rate of the electronic device may be the same as the frame rate of the display of the electronic device.

Therefore, a high frame rate of the electronic device may be understood as a high screen refresh rate. For example, the screen refresh rate of the electronic device and the frame rate of the display may be any one of 60 hertz (Hz), 70 Hz, 75 Hz, 80 Hz, 90 Hz, or 120 Hz.

For example, if the screen refresh rate of the electronic device and the frame rate of the display are 60 Hz, the signal period of the vertical synchronization signal 3 is 1/60=0.01667 seconds (s)=16.667 milliseconds (ms). If the screen refresh rate and the frame rate of the display are 90 Hz, the signal period of the vertical synchronization signal 3 is 1/90=0.0111 seconds=11.11 milliseconds. If the screen refresh rate and the frame rate of the display are 120 Hz, the signal period of the vertical synchronization signal 3 is 1/120=0.008333 seconds=8.33 milliseconds.

It should be noted that in some embodiments, the electronic device may support a plurality of different frame rates. The frame rate of the electronic device may switch between the foregoing different frame rates. For example, the electronic device may switch the frame rate from 60 Hz to 120 Hz, to increase the frame rate. The electronic device may alternatively switch the frame rate from 120 Hz to 60 Hz, to reduce the frame rate.

It may be understood that the frame rate in this embodiment of this application is a frame rate currently used by the electronic device. In other words, the signal period of the vertical synchronization signal 3 is a reciprocal of the frame rate currently used by the electronic device.

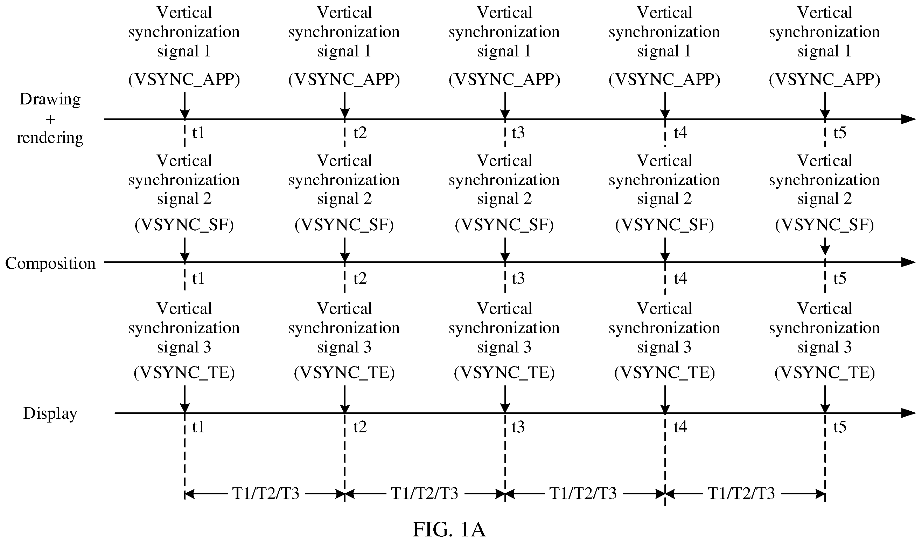

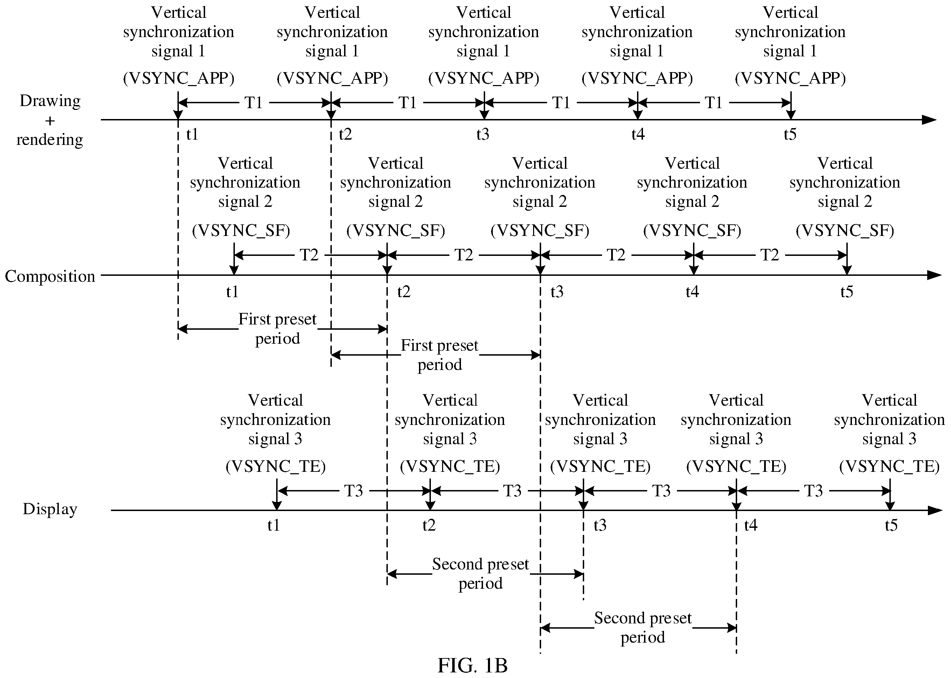

In addition, it should be noted that the vertical synchronization signal 3 in this embodiment of this application is a periodic discrete signal. FIG. 1A and FIG. 1B are schematic diagrams of a vertical synchronization signal. The following describes the vertical synchronization signal 1, the vertical synchronization signal 2, and the vertical synchronization signal 3 with reference to FIG. 1A and FIG. 1B.

As shown in FIG. 1A and FIG. 1B, two vertical synchronization signals 3 triggered by a hardware driver are separated by one signal period. The vertical synchronization signal 1 and the vertical synchronization signal 2 are generated based on the vertical synchronization signal 3. In other words, the vertical synchronization signal 3 may be a signal source of the vertical synchronization signal 1 and the vertical synchronization signal 2. Alternatively, the vertical synchronization signal 1 and the vertical synchronization signal 2 are synchronized with the vertical synchronization signal 3. Therefore, generally, signal periods of the vertical synchronization signal 1 and the vertical synchronization signal 2 are the same as the signal period of the vertical synchronization signal 3. However, it should be noted that phases of the vertical synchronization signal 1, the vertical synchronization signal 2, and the vertical synchronization signal 3 may be consistent, or may be inconsistent.

When the phases are consistent, for example, as shown in FIG. 1A, a signal period T1 of the vertical synchronization signal 1 and a signal period T2 of the vertical synchronization signal 2 are the same as the signal period T3 of the vertical synchronization signal 3. In addition, as shown in FIG. 1A, the phases of the vertical synchronization signal 1, the vertical synchronization signal 2, and the vertical synchronization signal 3 are consistent. In this case, vertical synchronization signals of each thread are separated by a same period, and are separated by one synchronization period. It may be understood that the vertical synchronization signal 1 and the corresponding vertical synchronization signal 2 are separated by one synchronization period, and the vertical synchronization signal 2 and the corresponding vertical synchronization signal 3 are separated by one synchronization period. As shown in FIG. 1A, a vertical synchronization signal 1 at a moment t1 and a vertical synchronization signal 2 at a moment t2 are separated by one synchronization period TZ. A vertical synchronization signal 2 at the moment t2 and a vertical synchronization signal 3 at a moment t3 are separated by one synchronization period TZ.

When the phases are inconsistent, for example, as shown in FIG. 1B, a signal period T1 of the vertical synchronization signal 1 and a signal period T2 of the vertical synchronization signal 2 are the same as the signal period T3 of the vertical synchronization signal 3. However, as shown in FIG. 1B, the phases of the vertical synchronization signal 1, the vertical synchronization signal 2, and the vertical synchronization signal 3 are inconsistent. In this case, periods separating vertical synchronization signals are not necessarily the same. To be specific, periods separating the corresponding vertical synchronization signal 1, vertical synchronization signal 2, and vertical synchronization signal 3 are not necessarily one synchronization period. As shown in FIG. 1B, a vertical synchronization signal 1 at a moment t1 and a vertical synchronization signal 2 at a moment t2 are separated by a first preset period. The vertical synchronization signal 2 at the moment t2 and a vertical synchronization signal 3 at a moment t3 are separated by a second preset period.

The first preset period and the second preset period are configured according to an actual requirement, and the first preset period and the second preset period may be greater than or less than the synchronization period. In addition, in embodiments of this application, the first preset period may be equal to the second preset period, or the first preset period may be unequal to the second preset period. It may be understood that the first preset period is a time reserved for performing drawing and rendering, and the second preset period is a time reserved for performing layer composition.

It may be understood that, when the phases are inconsistent, first preset period=second preset period=synchronization period. That is, the time reserved for drawing and rendering and the time reserved for composition are the same. When the phases are inconsistent, the time reserved for drawing and rendering and the time reserved for composition are different, and the time reserved for drawing and rendering and the time reserved for composition may be greater than or less than one synchronization period.

In the following, for ease of solution understanding, a vertical synchronization signal-based image processing method provided in embodiments of this application is mainly described by using an example in which the phases are consistent (first preset period = second preset period=synchronization period) in embodiments of this application.

It may be understood that, in an actual implementation process, a phase error may exist between the vertical synchronization signal 1, the vertical synchronization signal 2, and the vertical synchronization signal 3 due to various factors (for example, processing performance). It should be noted that the phase error is ignored when the method in embodiments of this application is understood.

In summary, the vertical synchronization signal 1, the vertical synchronization signal 2, and the vertical synchronization signal 3 are all periodic discrete signals. For example, as shown in FIG. 1A and FIG. 1B, two vertical synchronization signals 1 are separated by one signal period T1, two vertical synchronization signals 2 are separated by one signal period T2, and two vertical synchronization signals 3 are separated by one signal period T3. Signal periods of the vertical synchronization signal 1, the vertical synchronization signal 2, and the vertical synchronization signal 3 may all be referred to as the synchronization period TZ. That is, T1=T2=T3=TZ. In other words, the synchronization period TZ in embodiments of this application is the reciprocal of the screen refresh rate of the electronic device.

It should be noted that in different systems or architectures, names of the vertical synchronization signals may be different. For example, in some systems or architectures, the name of the vertical synchronization signal (namely, the vertical synchronization signal 1) used to trigger drawing of one or more layers may not be VSYNC_APP. However, no matter what the name of the vertical synchronization signal is, as long as the vertical synchronization signal is a synchronization signal with similar functions and conforms to the technical idea of the method provided in embodiments of this application, the vertical synchronization signal shall fall within the protection scope of this application.

Moreover, in different systems or architectures, definitions of the vertical synchronization signals may also be different. For example, in some other systems or architectures, a definition of the vertical synchronization signal 1 may be: the vertical synchronization signal 1 may be used to trigger rendering of the one or more layers; a definition of the vertical synchronization signal 2 may be: the vertical synchronization signal 2 may be used to trigger generation of an image frame based on the one or more layers; and a definition of the vertical synchronization signal 3 may be: the vertical synchronization signal 3 may be used to trigger display of the image frame. In embodiments of this application, the definition of the vertical synchronization signal is not limited. However, no matter what the definition of the vertical synchronization signal is, as long as the vertical synchronization signal is a synchronization signal with similar functions and conforms to the technical idea of the method provided in embodiments of this application, the vertical synchronization signal shall fall within the protection scope of this application.

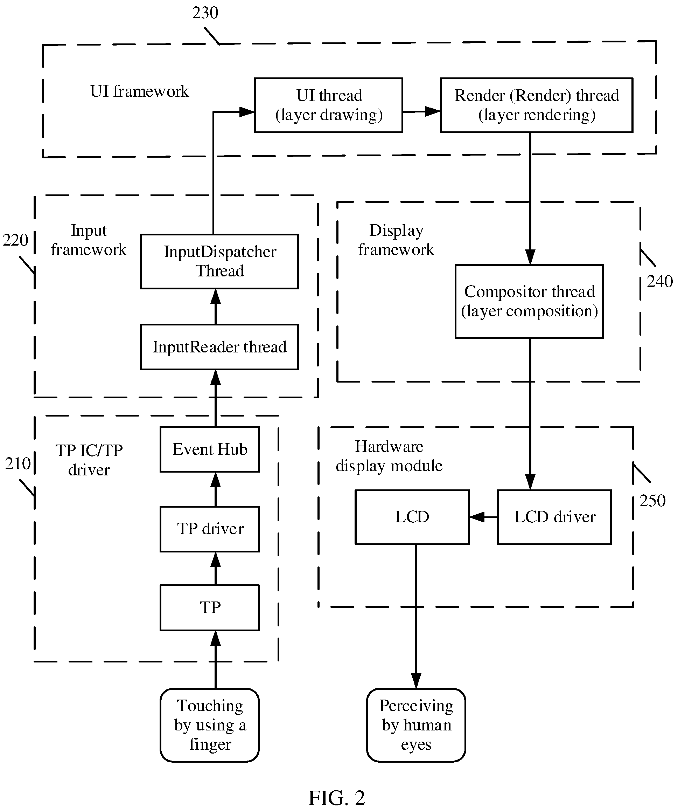

For ease of understanding, in embodiments of this application, an example in which the foregoing display is a touchscreen and an operation performed by a user on the display is a touch operation is used to describe a software processing procedure of an electronic device in a process from "the user inputs a touch operation on the touchscreen by using a finger" to "the touchscreen displays an image corresponding to the touch operation" with reference to FIG. 2.

As shown in FIG. 2, the electronic device may include a touch panel (touch panel, TP)/TP driver (Driver) 210, an Input framework (namely, Input Framework) 220, a UI framework (namely, UI Framework) 230, a Display framework (namely, Display Framework) 240, and a hardware display module 250.

As shown in FIG. 2, the software processing procedure of the electronic device may include step (1)-step (5).

Step (1): After the TP in the TP IC/TP driver 210 collects a touch operation performed by the user on the TP of the electronic device by using the finger, the TP driver reports a corresponding touch event to an Event Hub.

Step (2): An Input Reader thread of the Input framework 220 may read the touch event from the Event Hub, and then send the touch event to an Input Dispatcher thread; and the Input Dispatcher thread uploads the touch event to a UI thread in the UI framework 230.

Step (3): The UI thread (for example, Do Frame) in the UI framework 230 draws one or more layers corresponding to the touch event; and a render (Render) thread (for example, Draw Frame) performs layer rendering on the one or more layers. The UI thread is a thread in a central processing unit (Central Processing Unit, CPU) of the electronic device. The Render thread is a thread in a GPU of the electronic device.

Step (4): A compositor thread (Surface Flinger) in the Display framework 240 performs layer composition on the one or more drawn layers (namely, the one or more rendered layers), to obtain an image frame.

Step (5): A display driver in the hardware display module 250, which is a liquid crystal display (Liquid Crystal Display, LCD) driver in FIG. 2, may receive the composed image frame, and then an LCD displays the composed image frame. After the LCD displays the image frame, an image displayed by the LCD can be perceived by human eyes.

Generally, in response to the touch operation performed by the user on the TP or a UI event, after a vertical synchronization signal 1 arrives, the UI framework may invoke the UI thread to draw the one or more layers corresponding to the touch event, and then invoke the Render thread to render the one or more layers. Then, after a vertical synchronization signal 2 arrives, a hardware composer (Hardware Composer, HWC) may invoke the compositor thread to perform layer composition on the one or more drawn layers (namely, the one or more rendered layers), to obtain the image frame. Finally, the hardware display module may refresh and display the image frame on the LCD after a vertical synchronization signal 3 arrives. The UI event may be triggered by the touch operation performed by the user on the TP. Alternatively, the UI event may be automatically triggered by the electronic device. For example, when a foreground application of the electronic device automatically switches between pictures, the UI event may be triggered. The foreground application is an application corresponding to an interface currently displayed on the display of the electronic device.

The TP may periodically detect the touch operation performed by the user. After detecting the touch operation, the TP may wake up the vertical synchronization signal 1 and the vertical synchronization signal 2, to trigger the UI framework to perform layer drawing and rendering based on the vertical synchronization signal 1, and trigger the hardware composer HWC to perform layer composition based on the vertical synchronization signal 2. A detection period in which the TP detects the touch operation is the same as a signal period T3 of the vertical synchronization signal 3 (for example, HW_VSYNC).

It should be noted that the UI framework periodically performs layer drawing and rendering based on the vertical synchronization signal 1; the hardware composer HWC periodically performs layer composition based on the vertical synchronization signal 2; and the LCD periodically performs image frame refreshing based on the vertical synchronization signal 3.

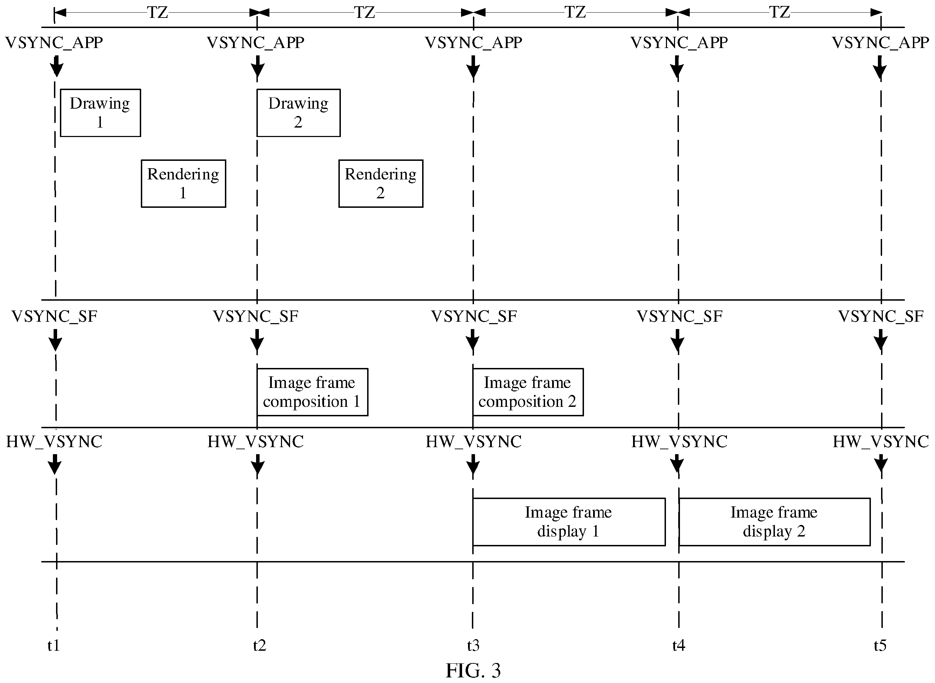

As shown in FIG. 3, an embodiment of this application shows a procedure in which an electronic device performs image frame drawing, rendering, composition, and refreshing and display. In the following, the procedure in which the electronic device performs drawing, rendering, composition, and image frame display is described with reference to FIG. 3 by using an example in which the foregoing vertical synchronization signal 1 is a VSYNC_APP signal, the foregoing vertical synchronization signal 2 is a VSYNC_SF signal, and the foregoing vertical synchronization signal 3 is a VSYNC_TE (namely, HW_VSYNC) signal.

As shown in FIG. 3, in response to a VSYNC_APP signal at a moment t1, a UI thread of the electronic device performs "Drawing 1" to draw a layer 1, and then a Render thread performs "Rendering 1" to render the layer 1; in response to a VSYNC_SF signal at a moment t2, a compositor thread of the electronic device performs "Image frame composition 1" to perform layer composition on the layer 1, to obtain an image frame 1; and in response to an HW_VSYNC signal at a moment t3, an LCD of the electronic device performs "Image frame display 1" to refresh and display the image frame 1.

For another example, as shown in FIG. 3, in response to a VSYNC_APP signal at a moment t2, a UI thread of the electronic device performs "Drawing 2" to draw a layer 2, and then a Render thread performs "Rendering b" to render the layer 2; in response to an HW_VSYNC signal at a moment t3, a compositor thread of the electronic device performs "Image frame composition 2" to perform layer composition on the layer 2, to obtain an image frame 2; and in response to an HW_VSYNC signal at a moment t4, an LCD of the electronic device performs "Image frame display 2" to refresh and display the image frame 2.

It can be learned that layer composition is correspondingly performed, on the layer drawn by the electronic device in response to the VSYNC_APP signal at the moment t1, at the VSYNC_SF signal at the moment t2 separated by one synchronization period (a first preset period), to obtain the image frame. The image frame obtained by performing layer composition on the HW_VSYNC signal at the moment t2 is correspondingly refreshed and displayed at the HW_VSYNC signal at the moment t3 separated by one synchronization period (a second preset period). In addition, layer composition is correspondingly performed, on the layer drawn by the electronic device in response to the VSYNC_APP signal at the moment t2, at the VSYNC_SF signal at the moment t3 separated by one synchronization period (the first preset period), to obtain the image frame. The image frame obtained by performing layer composition on the VSYNC_SF signal at the moment t3 is correspondingly refreshed and displayed at the HW_VSYNC signal at the moment t4 separated by one synchronization period (the second preset period).

It may be understood that the VSYNC_APP signal (for example, a first vertical synchronization signal) at the moment t1, the VSYNC_SF signal (for example, a second vertical synchronization signal) at the moment t2, and the HW_VSYNC signal (for example, a third vertical synchronization signal) at the moment t3 are corresponding vertical synchronization signals. For another example, the VSYNC_APP signal (for example, the first vertical synchronization signal) at the moment t2, the VSYNC_SF signal (for example, the second vertical synchronization signal) at the moment t3, and the HW_VSYNC signal (for example, the third vertical synchronization signal) at the moment t4 are also corresponding vertical synchronization signals.

It should be noted that "Drawing 1" shown in FIG. 3 may be implemented in a CPU of the electronic device, and "Rendering 1" may be implemented in a GPU of the electronic device. "Drawing 2" shown in FIG. 3 may be implemented in the CPU of the electronic device, and "Rendering 2" may be implemented in the GPU of the electronic device.

In some embodiments, rendering may be further performed by a Render thread in the CPU of the electronic device. It may be understood that rendering performed by the Render thread in the CPU is a preparation to perform layer rendering on the rendered layer 1 and layer 2 by the GPU, and "Rendering 1" and "Rendering 2" performed by the GPU are formal layer rendering performed by the electronic device on the drawn layer 1 and layer 2. In other words, drawing in this embodiment of this application may include: layer drawing performed by the UI thread and the preparation to perform, by the Render thread, layer rendering on the layer drawn by the UI thread.

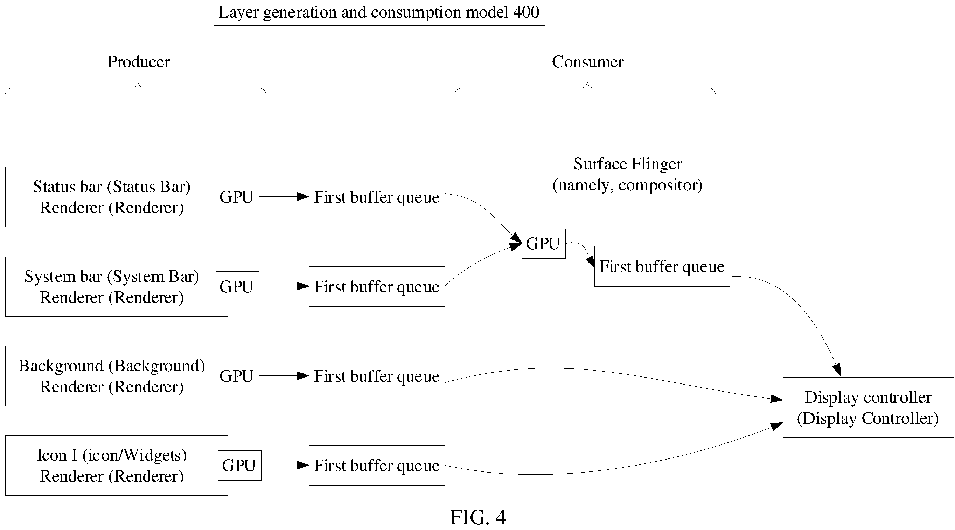

The foregoing process in which the electronic device performs drawing, rendering, and layer composition in FIG. 3 may form a layer generation and consumption model, for example, a layer generation and consumption model 400 shown in FIG. 4. In the layer generation and consumption model 400, a UI thread and a Render thread (namely, a renderer Render) of the electronic device serve as producers, to perform layer drawing and rendering. The Render thread (namely, the renderer Render) may store a layer for which a rendering preparation is completed in a first buffer queue, and perform layer rendering on a layer in the first buffer queue. A compositor thread (namely, a composer Surface Flinger) serves as a consumer, to read the layer from the first buffer queue, perform layer composition on the read layer to obtain an image frame, and send the image frame to an LCD (namely, a display controller Display Controller) of the electronic device for display.

In the layer generation and consumption model, both the producer (for example, the UI thread and the Render thread) and the consumer (for example, the compositor thread) perform layer generation and consumption based on a VSYNC signal.

In a case of no lagging (namely, no frame loss), a production rate and a consumption rate in the layer generation and consumption model are consistent. The producer (for example, the Render thread) generates one frame of layer (also referred to as frame data) every VSYNC period (for example, the foregoing synchronization period TZ), and places the frame of layer in the first buffer queue. The consumer (for example, the compositor thread) extracts one frame of layer from the first buffer queue every VSYNC period (for example, the foregoing synchronization period TZ) for layer composition (also referred to as image frame composition). That is, a production period of the UI thread and the Render thread that serve as producers and a consumption period of the compositor thread (namely, Surface Flinger) that serves as consumers are the same, and both are equal to the foregoing synchronization period TZ.

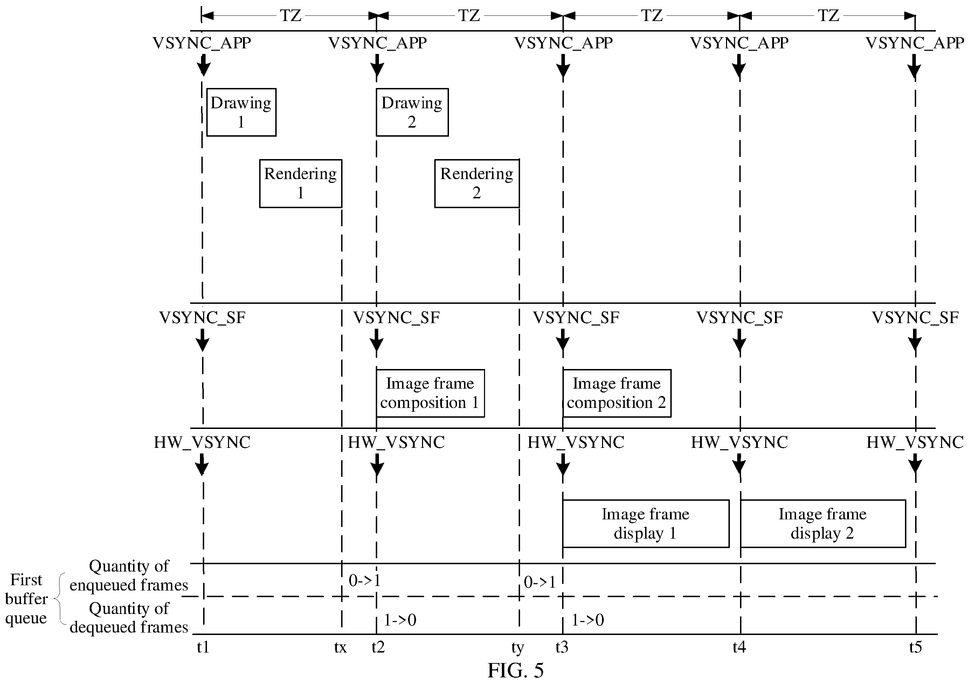

For example, as shown in FIG. 5, at a moment tx in FIG. 5, the Render thread of the electronic device completes "Rendering 1". In this case, the Render thread may buffer a rendered layer 1 in the first buffer queue. To be specific, the producer produces one frame of layer, and buffers the layer in the first buffer queue. In other words, at the moment tx, a quantity of layers in the first buffer queue increases from 0 to 1 (that is, 0->1). Subsequently, the electronic device responds to a VSYNC_SF signal at a moment t2 shown in FIG. 5, and the compositor thread of the electronic device may perform "Image frame composition 1" (also referred to as layer composition 1). In this case, the compositor thread may read the layer 1 from the first buffer queue. In other words, the consumer consumes one frame of layer from the first buffer queue. In other words, at the moment t2, the quantity of layers in the first buffer queue decreases from 1 to 0 (that is, 1->0).

For another example, at a moment ty shown in FIG. 5, the Render thread of the electronic device completes "Rendering 2". In this case, the Render thread may buffer a rendered layer 2 in the first buffer queue. To be specific, the producer produces one frame of layer, and buffers the layer in the first buffer queue. In other words, at the moment ty, a quantity of layers in the first buffer queue increases from 0 to 1 (that is, 0->1).

Subsequently, the electronic device responds to a VSYNC_SF signal at a moment t3 shown in FIG. 5, and the compositor thread of the electronic device may perform "Image frame composition 2" (also referred to as layer composition 2). In this case, the compositor thread may read the layer 2 from the first buffer queue. In other words, the consumer consumes one frame of layer from the first buffer queue. In other words, at the moment t3, the quantity of layers in the first buffer queue decreases from 1 to 0 (that is, 1->0).

However, in a process in which the electronic device performs layer drawing, rendering, and composition, and image frame refreshing and display in response to the foregoing VSYNC_APP signal, VSYNC_SF signal, and HW_VSYNC signal, a frame loss may occur because an application thread consumes a long period of time. Specifically, a display may display one frame of blank image in an image frame refreshing and display process. Therefore, coherence and smoothness of images displayed on the display are affected, thereby affecting visual experience of a user.

Specifically, a cause of a frame loss in an image displayed by the electronic device may be: Drawing and rendering performed by the UI thread and the Render thread consume a too long period of time, and drawing and rendering cannot be completed in one VSYNC period (for example, the foregoing synchronization period TZ).

Consequently, the producer (for example, the Render thread) cannot buffer a drawn and rendered layer in the first buffer queue in a timely manner. In other words, the producer (for example, the Render thread) does not buffer frame data in the first buffer queue in at least one VSYNC period. However, the consumer (for example, the compositor thread) still extracts one frame of layer from the first buffer queue every VSYNC period for layer composition. However, because the producer does not buffer the layer, the consumer cannot read the corresponding layer. Therefore, in this VSYNC period, layer composition cannot be performed to obtain an image frame, and the image frame cannot be refreshed and displayed. In this case, a picture displayed on the display cannot be updated, and a frame loss occurs. Therefore, coherence and smoothness of images displayed on the display are affected, thereby affecting visual experience of the user.

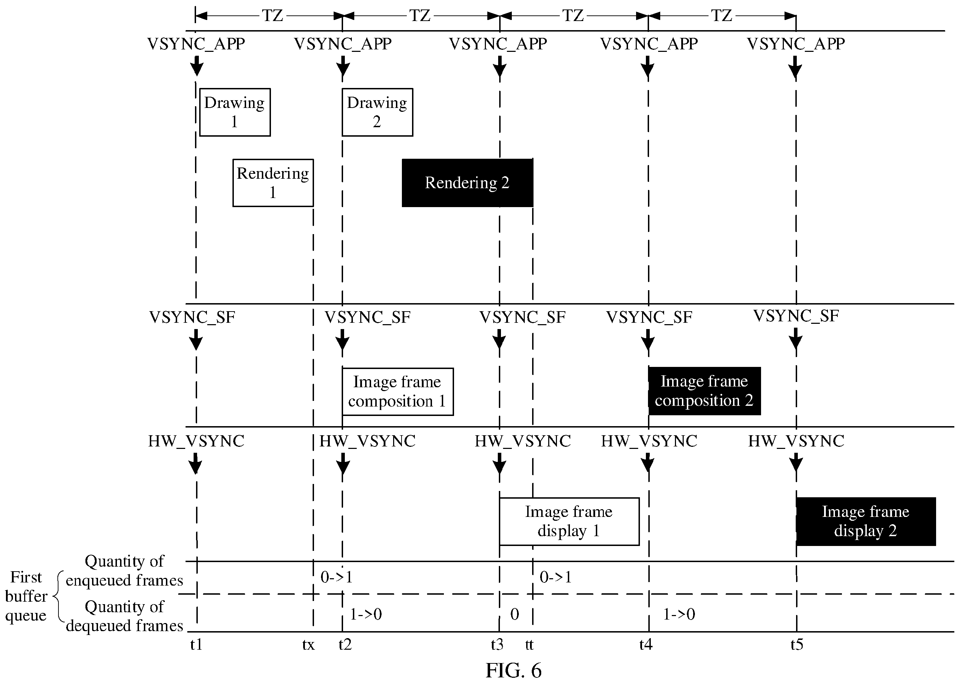

For example, as shown in FIG. 6, an embodiment of this application shows a schematic diagram of a frame loss. As shown in FIG. 6, if the Render thread cannot complete "Rendering 2" before the moment t3 arrives, the layer 2 cannot be buffered in the first buffer queue before the moment t3. Further, at the moment t3, an amount of frame data in the first buffer queue is 0. Therefore, in response to the VSYNC_SF signal at the moment t3, the compositor thread cannot read a layer from the first buffer queue, and therefore cannot perform layer composition to obtain an image frame. Consequently, the display of the electronic device cannot refresh and display the image frame at a moment t4, and a frame loss occurs.

The Render thread completes "Rendering 2" only at a moment tt after the moment t3. In this case, the quantity of layers in the first buffer queue increases from 0 to 1 (that is, 0->1). In response to a VSYNC_SF signal at the moment t4 after the moment tt, the compositor thread may read the layer 2 from the first buffer queue, and the quantity of layers in the first buffer queue decreases from 1 to 0 (that is, 1->0). In this case, the display of the electronic device can perform "Image frame display 2" at a moment t5 to refresh and display an image frame.

It can be learned from FIG. 6 that, in a synchronization period from the moment t4 to the moment t5, a frame loss occurs in the image displayed by the display of the electronic device. According to a method in embodiments of this application, the frame loss in the displayed image can be avoided, to avoid displaying a frame of blank image on the display. In other words, according to the method in embodiments of this application, a possibility that a frame loss occurs in the image displayed by the electronic device can be reduced, and smoothness of images displayed on the display can be ensured, to improve visual experience of the user.

Further, even if the frame loss cannot be avoided, according to the method in embodiments of this application, impact exerted by the frame loss can be reduced as much as possible, and smoothness of the image displayed on the display is ensured as much as possible.

It should be noted that, a cause of the frame loss in the image displayed by the electronic device may be that the electronic device cannot complete drawing and rendering of one frame of layer in one frame (for example, one synchronization period TZ), or may be that the electronic device cannot complete layer composition of one frame of layer in one frame (for example, one synchronization period TZ).

In the following embodiments, an example in which a UI thread and a Render thread cannot complete drawing and rendering of one frame of layer in one frame, and consequently, a frame loss occurs in an image displayed by an electronic device is mainly used to describe a vertical synchronization signal-based image processing method in embodiments of this application.

In the vertical synchronization signal-based image processing method in embodiments of this application, a specific cause of a possible frame loss is mainly determined based on a time sequence between a first moment and each of a VSYNC_SF signal (namely, a second vertical synchronization signal) and an HW_VSYNC signal (namely, a third vertical synchronization signal). Further, the electronic device adjusts a time point of layer composition and a time point of image frame refreshing and display based on the specific cause. For example, after the VSYNC_SF signal is missed, if an image frame (first image frame) to be refreshed and displayed does not exist at an HW_VSYNC signal that corresponds to and is separated from the VSYNC_SF signal by one synchronization period (a second preset period), the electronic device may make a decision to immediately perform layer composition. In this way, the image frame may be refreshed and displayed in the synchronization period of the corresponding HW_VSYNC signal, to avoid a frame loss in the image frame.

Alternatively, when the electronic device determines that the frame loss has occurred, the electronic device may make a decision to refresh and display the image frame in advance, to reduce impact exerted by the frame loss as much as possible, and ensure smoothness of picture display as much as possible, so as to improve visual experience of a user.

The first moment is a moment at which the electronic device performs drawing and rendering in response to a VSYNC_APP signal (namely, a first vertical synchronization signal) to obtain a first layer, and stores the first layer in a first buffer queue. In addition, it may be understood that the first vertical synchronization signal (VSYNC_APP signal), the second vertical synchronization signal (VSYNC_SF signal), and the third vertical synchronization signal (HW_VSYNC signal) herein in embodiments of this application are corresponding vertical synchronization signals.

For example, the VSYNC_APP signal, the VSYNC_SF signal, and the HW_VSYNC signal that correspond to each other herein may be the VSYNC_APP signal at the moment t1, the VSYNC_SF signal at the moment t2, and the HW_VSYNC signal (VSYNC_TE signal) at the moment t3 that correspond to each other in FIG. 1A, FIG. 1B, FIG. 3, FIG. 5, or FIG. 6. Alternatively, the VSYNC_APP signal, the VSYNC_SF signal, and the HW_VSYNC signal that correspond to each other herein may be the VSYNC_APP signal at the moment t2, the VSYNC_SF signal at the moment t3, and the HW_VSYNC signal (VSYNC_TE signal) at the moment t4 that correspond to each other in FIG. 1A, FIG. 1B, FIG. 3, FIG. 5, or FIG. 6.

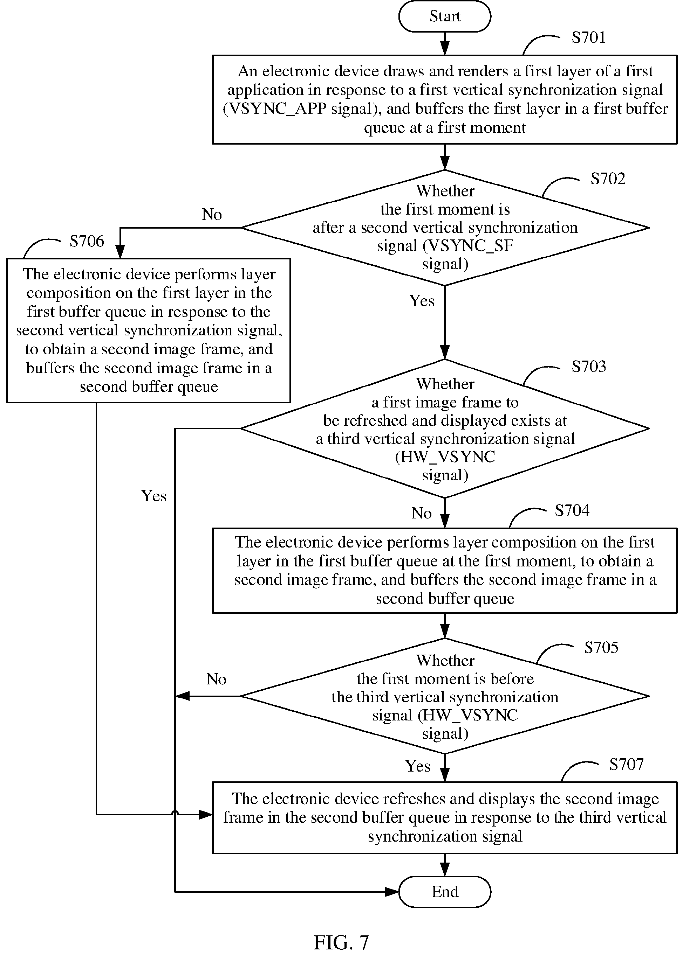

As shown in FIG. 7, an embodiment of this application shows a flowchart of a vertical synchronization signal-based image processing method. The method is applied to an electronic device including a display (for example, a touchscreen), and may include steps S701-S707.

S701: The electronic device draws and renders a first layer of a first application in response to a first vertical synchronization signal (VSYNC_APP signal), and buffers the first layer in a first buffer queue at a first moment.

When one first vertical synchronization signal (VSYNC_APP signal) arrives, the electronic device draws the first layer of the first application in response to the first vertical synchronization signal, and buffers the drawn first layer in the first buffer queue.

In this embodiment of this application, a moment at which the electronic device buffers the first layer is recorded as a first moment. The first application may be any application that needs to display a picture.

In some embodiments, a UI thread may draw the first layer in response to the first vertical synchronization signal (VSYNC_APP signal). Then, a Render thread makes a rendering preparation for the first layer drawn by the UI thread, and buffers the first layer in the first buffer queue. It should be noted that after the Render thread buffers the first layer in the first buffer queue, the Render thread may formally render the first layer buffered in the first buffer queue. Then, a compositor thread may perform layer composition on a layer (for example, the first layer) buffered in the first buffer queue, to obtain an image frame (for example, a second image frame).

S702: The electronic device determines whether the first moment is after a second vertical synchronization signal (VSYNC_SF signal).

The second vertical synchronization signal herein is used to trigger layer composition, and is a vertical synchronization signal that corresponds to and is separated from the first vertical synchronization signal in S701 by one synchronization period (a first preset period). If the electronic device determines that the first moment is after the second vertical synchronization signal (VSYNC_SF signal), the electronic device performs S703; or if the electronic device determines that the first moment is before the second vertical synchronization signal (VSYNC_SF signal), the electronic device performs S706.

S703: The electronic device determines whether a first image frame to be refreshed and displayed exists at a third vertical synchronization signal (HW_VSYNC signal). The third vertical synchronization signal herein is used to trigger image frame refreshing and display, and is a vertical synchronization signal that corresponds to and is separated from the second vertical synchronization signal in S702 by one synchronization period (a second preset period), namely, a vertical synchronization signal that corresponds to and is separated from the first vertical synchronization signal in S701 by two synchronization periods (a sum of the first preset period and the second preset period).

If the first image frame to be refreshed and displayed exists at the third vertical synchronization signal, the electronic device ends processing in this procedure. On the contrary, if the first image frame to be refreshed and displayed does not exist at the third vertical synchronization signal, the electronic device performs S704.

S704: The electronic device performs layer composition on the first layer in the first buffer queue at the first moment, to obtain the second image frame, and buffers the second image frame in a second buffer queue.

S705: The electronic device determines whether the first moment is before the third vertical synchronization signal (HW_VSYNC signal). If the first moment is before the third vertical synchronization signal (HW_VSYNC signal), the electronic device performs S707; or if the first moment is after the third vertical synchronization signal (HW_VSYNC signal), the electronic device ends processing in this procedure.

S706: The electronic device performs layer composition on the first layer in the first buffer queue in response to the second vertical synchronization signal, to obtain the second image frame, and buffers the second image frame in a second buffer queue.

S707: The electronic device refreshes and displays the second image frame in the second buffer queue in response to the third vertical synchronization signal.

Specifically, if the electronic device determines that the first moment is before the second vertical synchronization signal (VSYNC_SF signal) that corresponds to and is separated from the first vertical synchronization signal (VSYNC_APP signal) by one synchronization period (the first preset period), it indicates that before the second vertical synchronization signal (VSYNC_SF signal) that corresponds to and is separated from the first vertical synchronization signal (VSYNC_APP signal) by one synchronization period (the first preset period) arrives, the electronic device has successfully completed drawing and rendering of a layer (for example, the first layer), and stores the drawn and rendered layer in the first buffer queue.

In other words, it indicates that before the second vertical synchronization signal (VSYNC_SF signal) that corresponds to and is separated from the first vertical synchronization signal (VSYNC_APP signal) by one synchronization period (the first preset period) arrives, the electronic device has successfully sent the layer (the first layer) to the compositor thread. Then, layer composition may be successfully performed on the layer (the first layer) when the second vertical synchronization signal (VSYNC_SF signal) arrives. In addition, the electronic device may further successfully refresh and display the composed image frame when the second vertical synchronization signal (VSYNC_SF signal) that corresponds to and is separated from the third vertical synchronization signal (HW_VSYNC signal) by one synchronization period (the second preset period) arrives. That is, the frame loss does not occur.

For example, as shown in FIG. 6, the electronic device draws and renders a layer 1 (the first layer) in response to a first vertical synchronization signal (VSYNC_APP signal) at a moment t1, and the electronic device stores the layer 1 (the first layer) in the first buffer queue at a moment tx (the first moment). In this case, the moment tx (the first moment) is before the second vertical synchronization signal (VSYNC_SF signal) at the corresponding moment t2. In other words, the first moment is before the second vertical synchronization signal (VSYNC_SF signal) that corresponds to and is separated from the first vertical synchronization signal (VSYNC_APP signal) by one synchronization period (the first preset period) in this embodiment of this application.

In this case, when the second vertical synchronization signal (VSYNC_SF signal) at the moment t2 arrives, the electronic device may successfully perform "Image frame composition 1" on the layer 1 (the first layer) in response to the second vertical synchronization signal (VSYNC_SF signal), to obtain an image frame 1 (the second image frame). In addition, when a third vertical synchronization signal (HW_VSYNC signal) at a moment t3 arrives, the electronic device may successfully perform "Image frame display 1" in response to the third vertical synchronization signal (HW_VSYNC signal), to refresh and display the image frame 1 (the second image frame).

In this way, the layer 1 (the first layer) drawn and rendered by the electronic device in response to the first vertical synchronization signal (VSYNC_APP signal) at the moment t1 may be successfully displayed in a synchronization period of the corresponding third vertical synchronization signal (HW_VSYNC signal) at the moment t3 separated by two synchronization periods (the sum of the first preset period and the second preset period), and no frame loss occurs in the electronic device.

Therefore, in the foregoing case, the electronic device performs S706, to wait, based on a normal procedure, for arrival of the corresponding second vertical synchronization signal (VSYNC_SF signal) separated by one synchronization period (the first preset period), and perform layer composition on the first layer in response to the second vertical synchronization signal (VSYNC_SF signal), to obtain the second image frame.

In some embodiments, the compositor thread may read, for layer composition, the first layer from the first buffer queue in response to the second vertical synchronization signal (VSYNC_SF signal), to obtain the second image frame. Then, the electronic device performs S707, to wait, based on the normal procedure, for arrival of the corresponding third vertical synchronization signal (HW_VSYNC signal), and refresh and display the second image frame in response to the third vertical synchronization signal (HW_VSYNC signal). In some embodiments, a display driver may read the second image frame from the second buffer queue for refreshing and displaying on the display (for example, an LCD or an OLED)

If the electronic device determines that the first moment is after the second vertical synchronization signal (VSYNC_SF signal) that corresponds to and is separated from the first vertical synchronization signal (VSYNC_APP signal) by one synchronization period (the first preset period), it indicates that before the second vertical synchronization signal (VSYNC_SF signal) that corresponds to and is separated from the first vertical synchronization signal (VSYNC_APP signal) by one synchronization period (the first preset period) arrives, the electronic device does not successfully complete drawing and rendering of the layer (for example, the first layer).

In other words, it indicates that before the second vertical synchronization signal (VSYNC_SF signal) that corresponds to and is separated from the first vertical synchronization signal (VSYNC_APP signal) by one synchronization period (the first preset period) arrives, the electronic device does not successfully send the layer (the first layer) to the compositor thread.

Therefore, when the second vertical synchronization signal (VSYNC_SF signal) that corresponds to and is separated from the first vertical synchronization signal (VSYNC_APP signal) by one synchronization period (the first preset period) arrives, the compositor thread cannot perform layer composition on the layer (the first layer) in response to the second vertical synchronization signal (VSYNC_SF signal), to obtain the image frame (for example, the second image frame corresponding to the first layer). Further, when the third vertical synchronization signal (HW_VSYNC signal) that corresponds to and is separated from the first vertical synchronization signal (VSYNC_APP signal) by the two synchronization periods (the sum of the first preset period and the second preset period) arrives, the electronic device cannot refresh and display the corresponding image frame (the second image frame) in response to the third vertical synchronization signal (HW_VSYNC signal), thereby causing a frame loss. That is, the second image frame is lost, and the display of the electronic device does not display the second image frame in the corresponding synchronization period.

For example, as shown in FIG. 6, the electronic device draws and renders a layer 2 (the first layer) in response to a first vertical synchronization signal (VSYNC_APP signal) at a moment t2. However, drawing and rendering of the layer 2 (the first layer) on an application side consume a too long period of time, that is, drawing and rendering of the layer 2 (the first layer) time out. Consequently, the electronic device stores the layer 2 (the first layer) in the first buffer queue until a moment tt (the first moment).

In this case, the moment tt (the first moment) is after the second vertical synchronization signal (VSYNC_SF signal) at a corresponding moment t3. In other words, the first moment is after the second vertical synchronization signal (VSYNC_SF signal) that corresponds to and is separated from the first vertical synchronization signal (VSYNC_APP signal) by one synchronization period (the first preset period) in this embodiment of this application.

In this case, when the second vertical synchronization signal (VSYNC_SF signal) at the moment t3 arrives, because the layer 2 (the first layer) does not exist in the first buffer queue, the electronic device cannot read the layer 2 (the first layer), in other words, the compositor thread cannot read the layer 2 (the first layer). Consequently, the electronic device cannot perform layer composition on the layer 2 (the first layer) in a synchronization period TZ of the second vertical synchronization signal (VSYNC_SF signal). Further, when a third vertical synchronization signal (HW_VSYNC signal) at a moment t4 arrives, no corresponding image frame 2 (the second image frame) may be refreshed and displayed. In other words, in a synchronization period from the moment t4 to a moment t5, a frame loss occurs in the image displayed by the display of the electronic device.

In this case, to avoid the frame loss, in some embodiments, the electronic device may trigger the compositor thread to immediately perform layer composition on the first layer (the layer 2 in FIG. 6) at the first moment (the moment tt in FIG. 6).

However, based on an actual work allocation status of the compositor thread, the compositor thread used to perform layer composition may not independently perform layer composition only on the first layer of the first application. In other words, the compositor thread that performs layer composition on the first layer of the first application may be further allocated to perform layer composition for another application, for example, is further allocated to compose a layer of a second application.

Therefore, if layer composition is not performed on the first layer of the first application in a timely manner because the second vertical synchronization signal (VSYNC_SF signal) is missed due to timeout of drawing, the corresponding compositor thread may perform layer composition on a layer of the another application in response to the second vertical synchronization signal (VSYNC_SF signal).

In other words, at the first moment at which the first layer is buffered, the corresponding compositor thread may respond to the second vertical synchronization signal (VSYNC_SF signal) with a case in which layer composition is being performed on the layer of the another application. Further, provided that the image frame (namely, the first image frame) currently obtained by performing layer composition is successfully stored in the second buffer queue, when the third vertical synchronization signal (HW_VSYNC signal) that corresponds to and is separated from the second vertical synchronization signal (VSYNC_SF signal) by one synchronization period (the second preset period) arrives, the electronic device necessarily first reads an image frame (the first image frame) of the another application from the second buffer queue for refreshing and display.

Therefore, even if the electronic device immediately triggers layer composition on the first layer at the first moment, to obtain the second image frame, the second image frame cannot be successfully refreshed and displayed when the third vertical synchronization signal (HW_VSYNC signal) arrives.

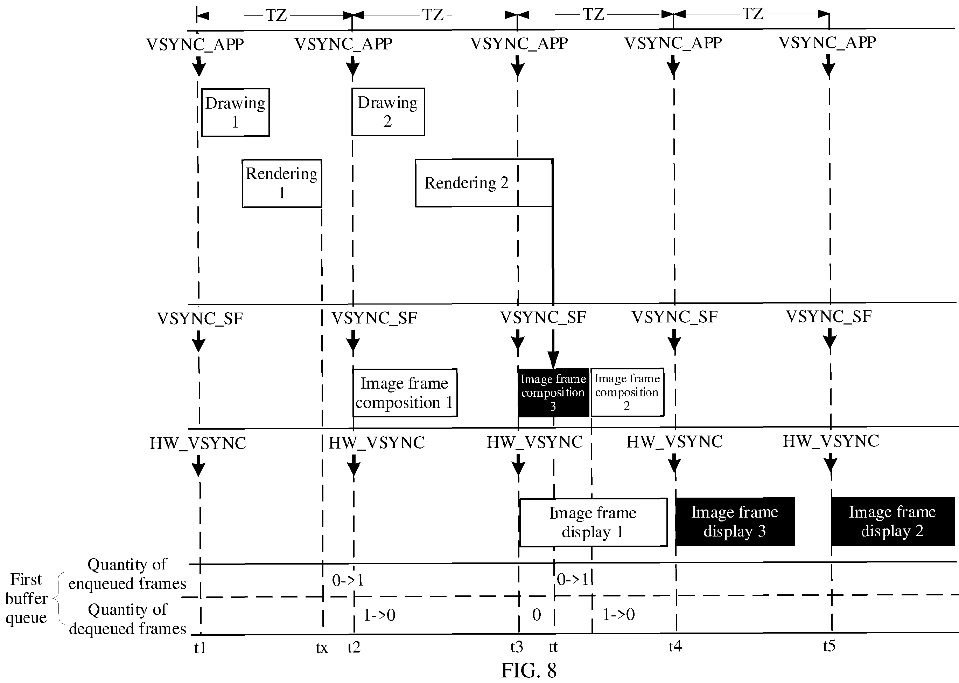

For example, as shown in FIG. 8, the electronic device stores the layer 2 (the first layer) in the first buffer queue until the moment tt (the first moment) because drawing and rendering of the layer 2 (the first layer) time out. However, in this case, the second vertical synchronization signal (VSYNC_SF signal) at the moment t3 (the first moment) corresponding to the moment tt is responded to by the electronic device with a case in which "Image frame composition 3" is being performed to obtain an image frame 3 (namely, layer composition is performed on the layer of the another application, to obtain a first image frame).

Further, after the third vertical synchronization signal (HW_VSYNC signal) at the moment t4 arrives, the electronic device necessarily performs "Image frame display 3" in response to the third vertical synchronization signal (HW_VSYNC signal), to refresh and display the image frame 3 (the first image frame). Therefore, even if the electronic device immediately triggers "Image frame composition 2" at the first moment (the moment tt) to perform layer composition on the layer 2 (the first layer), the image frame 2 (the second image frame) obtained by the electronic device is not refreshed or displayed in a synchronization period TZ of the third vertical synchronization signal (HW_VSYNC signal) at the moment t4.

As shown in FIG. 8, the image frame 2 (the second image frame) may be delayed to be refreshed and displayed within a synchronization period TZ of a third vertical synchronization signal (HW_VSYNC signal) at the moment t5. Therefore, even if the electronic device triggers immediate composition, a frame loss in the image frame 2 (the second image frame) cannot be avoided.

Therefore, if the electronic device determines that the first moment is after the second vertical synchronization signal (VSYNC_SF signal), it indicates that the electronic device can determine that the frame loss needs to be avoided through immediate composition. However, the electronic device further needs to determine whether the frame loss can be avoided through immediate composition currently. In other words, in this case, the electronic device needs to perform S703, to further determine whether the first image frame to be refreshed and displayed exists at the third vertical synchronization signal (HW_VSYNC signal).

If the electronic device determines that the first image frame to be refreshed and displayed exists at the third vertical synchronization signal (HW_VSYNC signal), for example, "Image frame composition 3" shown in FIG. 8, that is, the second vertical synchronization signal (VSYNC_SF signal) is responded to by the compositor thread with a case in which layer composition is being performed, even if the electronic device triggers immediate composition, the frame loss in the second image frame cannot be avoided. Therefore, in this embodiment of this application, additional processing is not added, and the electronic device ends processing in this procedure.

If the electronic device determines that the first image frame to be refreshed and displayed does not exist at the third vertical synchronization signal (HW_VSYNC signal), the electronic device triggers immediate composition, to ensure that the second image frame is successfully displayed in the synchronization period TZ of the third vertical synchronization signal (HW_VSYNC signal). In this case, even if drawing and rendering of the first layer by the electronic device time out, the second image frame is lost, to avoid a frame loss.

Therefore, in this case, the electronic device performs S704. To be specific, the electronic device immediately performs layer composition on the first layer in the first buffer queue at the first moment, to obtain the second image frame, and buffers the second image frame in the second buffer queue.

Specifically, the electronic device may immediately send an instruction to the compositor thread at the first moment, to indicate the compositor thread to immediately read the first layer from the first buffer queue for layer composition to obtain the second image frame corresponding to the first layer.

In addition, after layer composition of the second image frame is completed, the second image frame is buffered in the second buffer queue. Subsequently, in response to the third vertical synchronization signal (HW_VSYNC signal), the display driver reads a second image from the second buffer queue, and refreshes and displays the second image frame on the display.

After the electronic device immediately completes layer composition on the first layer in the first buffer queue at the first moment, to obtain the corresponding second image frame, and buffers the second image frame in the second buffer queue, the electronic device may refresh and display the second image frame in response to the corresponding third vertical synchronization signal (HW_VSYNC signal) based on the normal procedure.

Therefore, in this embodiment of this application, when it is ensured that the second image frame may be refreshed and displayed at the corresponding third vertical synchronization signal, immediate composition is triggered, to avoid the frame loss in the second image frame.

However, in some other embodiments, even if the second image frame is obtained through immediate composition at the first moment and the first image frame to be refreshed and displayed does not exist at the third vertical synchronization signal, there is another case in which the second image frame cannot be successfully refreshed and displayed when the third vertical synchronization signal (HW_VSYNC signal) arrives, namely, a case in which the first moment is after the third vertical synchronization signal (HW_VSYNC signal).

If the first moment at which the electronic device completes drawing and rendering in response to the first vertical synchronization signal (VSYNC_APP) and buffers the first layer in the first buffer queue is a moment at which the corresponding third vertical synchronization signal (HW_VSYNC signal) is missed, even if immediate composition of the first layer at the first moment is triggered, regardless of a layer composition speed of the compositor thread, there is a state in which the third vertical synchronization signal (HW_VSYNC signal) is missed. Therefore, the second image frame still cannot be displayed in the synchronization period TZ of the corresponding third vertical synchronization signal (HW_VSYNC signal), and therefore, the frame loss still occurs.

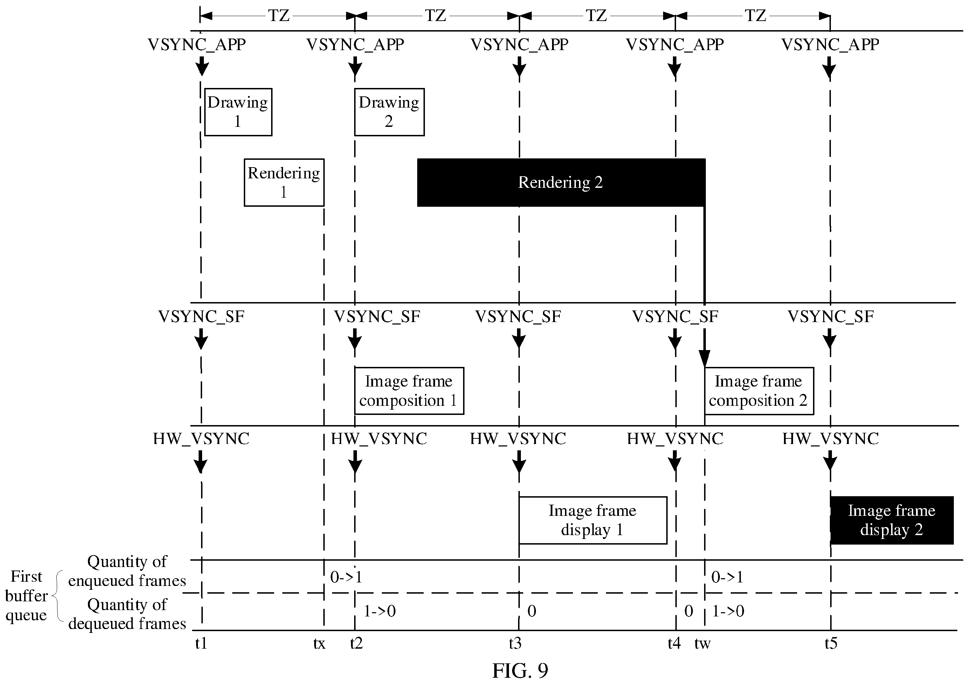

For example, as shown in FIG. 9, the electronic device buffers the layer 2 (the first layer) in the first buffer queue until a moment tw (the first moment) because drawing and rendering of the layer 2 (the first layer) time out. In this case, the moment tw is after the moment t4. Therefore, even if the electronic device immediately performs layer composition on the layer 2 (the first layer) at the moment tw (the first moment) to obtain the image frame 2 (the second image frame), the second image frame cannot be successfully refreshed and displayed between the moment t4 and the moment t5. As shown in FIG. 9, the image frame 2 (the second image frame) may still be delayed to be refreshed and displayed between the moment t5 and a moment t6 (the moment t6 is a 1^{st} moment after the moment t5, not shown in the figure). In this case, the image frame 2 (the second image frame) is still lost.

Therefore, in this embodiment of this application, after performing immediate composition at the first moment to obtain the second image frame and buffering the second image frame in the second buffer queue, the electronic device may further determine whether the first moment is before the corresponding third vertical synchronization signal (HW_VSYNC signal). In other words, after completing S704, the electronic device performs S705, to determine whether the first moment is before the third vertical synchronization signal (HW_VSYNC signal).

If the first moment is after the corresponding third vertical synchronization signal (HW_VSYNC signal) (that is, the first moment is not before the corresponding third vertical synchronization signal (HW_VSYNC signal)), the frame loss in the second image frame cannot be avoided. Therefore, in this embodiment of this application, additional processing is not added, and the electronic device ends processing in this procedure.

If the first moment is before the corresponding third vertical synchronization signal (HW_VSYNC signal), it indicates that when the third vertical synchronization signal (HW_VSYNC signal) arrives, the electronic device may read the second image frame from the second buffer queue in response to the third vertical synchronization signal (HW_VSYNC signal), and successfully refresh and display the second image frame, to ensure that no frame loss occurs.

In other words, if the first moment is before the corresponding third vertical synchronization signal (HW_VSYNC signal), the electronic device performs S707, to wait, based on the normal procedure, for arrival of the corresponding third vertical synchronization signal (HW_VSYNC signal), and refresh and display the composed second image frame in response to the third vertical synchronization signal (HW_VSYNC signal). Therefore, the second image frame is successfully displayed, and no frame loss occurs.

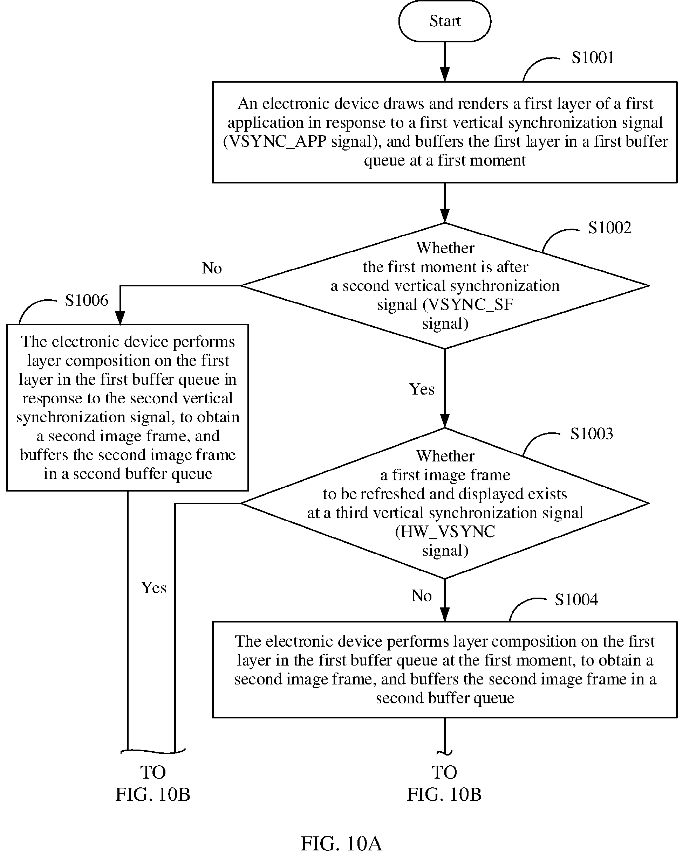

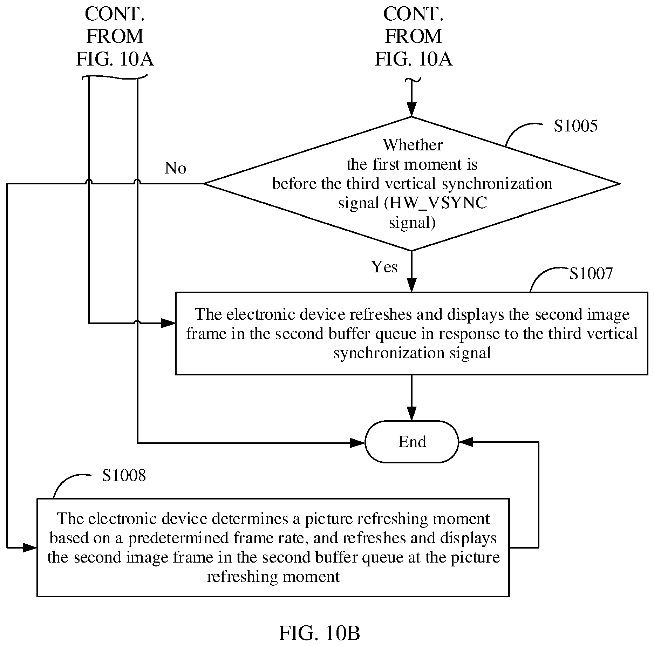

As shown in FIG. 10A and FIG. 10B, an embodiment of this application shows a flowchart of another vertical synchronization signal-based image processing method. The method may include steps S1001-S1008.

It may be learned from a comparison between FIG. 10A and FIG. 10B and FIG. 7 that in this embodiment of this application, S 1008 is added to the procedure shown in FIG. 7. An electronic device determines a picture refreshing moment based on a predetermined frame rate, and refreshes and displays a second image frame in a second buffer queue at the picture refreshing moment.

In this embodiment of this application, for a case in which a first moment is after a third vertical synchronization signal (HW_VSYNC signal) and in which a frame loss cannot be avoided, in this embodiment of this application, the picture refreshing moment is added to advance display of the second image frame as much as possible, to reduce display impact caused by the frame loss and ensure smoothness of picture display on a display as much as possible.

It should be noted that for specific implementations of S1001-S1007 in this embodiment of this application, refer to specific implementations of S701-S707 in the foregoing embodiments. Specific implementations and principles are the same. Details are not described in this embodiment of this application.

In the following, S1008 in FIG. 10A and FIG. 10B is mainly described in detail in this embodiment of this application.

Specifically, if the first moment is after the third vertical synchronization signal (HW_VSYNC signal), regardless of a layer composition speed of the first layer, the second image frame cannot be displayed in a synchronization period TZ corresponding to the third vertical synchronization signal (HW_VSYNC signal). For example, as shown in FIG. 9, for a specific analysis of this case, refer to the foregoing analysis of FIG. 9. Details are not described herein again.

However, in this case, although the second image frame misses being refreshed and displayed when the third vertical synchronization signal (HW_VSYNC signal) arrives, the second image frame is a state in which the second image frame is successfully buffered in the second buffer queue and waits for reading by the display driver for refreshing and display. It may be understood that, in this embodiment of this application, the second image frame is in a state of being capable of being read at any time for refreshing and display.

Therefore, to reduce impact exerted by the frame loss, the second image frame is displayed as soon as possible, and subsequent image frame refreshing and display are prevented from being affected. In this embodiment of this application, a new picture refreshing moment is determined based on the predetermined frame rate, to refresh and display the lost second image frame in advance. In other words, the electronic device reads the second image frame in the second buffer queue at the new picture refreshing moment for refreshing and display.

The predetermined frame rate in this embodiment of this application is greater than a frame rate of the display of the electronic device. The predetermined frame rate may be set based on a display requirement and a capability that can be supported by display hardware. In addition, the picture refreshing moment at which the electronic device reads the second image frame in the second buffer queue for refreshing and display is after the third vertical synchronization signal (HW_VSYNC signal) and before a fourth vertical synchronization signal (HW_VSYNC signal). The fourth vertical synchronization signal (HW_VSYNC signal) is also a vertical synchronization signal used to trigger image frame display, and the fourth vertical synchronization signal (HW_VSYNC signal) is after the third vertical synchronization signal (HW_VSYNC signal), and is separated from the third vertical synchronization signal (HW_VSYNC signal) by one synchronization period. It may be understood that, because both the third vertical synchronization signal and the fourth vertical synchronization signal are HW_VSYNC signals, the third vertical synchronization signal and the fourth vertical synchronization signal are separated by one synchronization period, namely, a reciprocal of a screen refresh rate.

That is, the picture refreshing moment determined in this embodiment of this application is between the third vertical synchronization signal (HW_VSYNC signal) and the fourth vertical synchronization signal (HW_VSYNC signal). In other words, the picture refreshing moment is between the missed third vertical synchronization signal (HW_VSYNC signal) and a next third vertical synchronization signal (HW_VSYNC signal) corresponding to the third vertical synchronization signal (HW_VSYNC signal). For example, the picture refreshing moment is between a moment t4 (the third vertical synchronization signal) and a moment t5 (the fourth vertical synchronization signal, namely, the next third vertical synchronization signal corresponding to the moment t4).

Generally, the electronic device (for example, the display driver) determines a refreshing moment of an image frame (for example, the second image frame) based on the frame rate (namely, the screen refresh rate) of the display. In other words, when a rate of a producer and a rate of a consumer are consistent and no frame loss occurs, one image frame is generally refreshed and displayed in one synchronization period on a display driver side.

For example, a frame rate of 60 HZ is to refresh and display one image frame every 16.667 milliseconds. In other words, a time interval between refreshing moments of image frames is 6.667 milliseconds. For example, a frame rate of 90 HZ is to refresh and display one image frame every 11.11 milliseconds. In other words, a time interval between refreshing moments of image frames is 11.11 milliseconds. For example, a frame rate of 120 HZ is to refresh and display one image frame every 8.33 milliseconds. In other words, a time interval between refreshing moments of image frames is 8.83 milliseconds.

It can be learned that when the frame rate (namely, the screen refresh rate) of the display of the electronic device is higher, a time interval for refreshing and displaying the image frame is shorter. Therefore, in a case of a frame loss, the new picture refreshing moment may be determined based on a predetermined frame rate higher than the frame rate (namely, the screen refresh rate) of the display of the electronic device. It may be understood that because the predetermined frame rate is higher than the frame rate (namely, the screen refresh rate) of the display of the electronic device, a quantity of picture refreshing moments corresponding to the predetermined frame rate is greater than a quantity of picture refreshing moments corresponding to the frame rate (namely, the screen refresh rate) of the display of the electronic device, and the picture refreshing moments corresponding to the predetermined frame rate are more compact than the picture refreshing moments corresponding to the frame rate (namely, the screen refresh rate) of the display of the electronic device. Further, the electronic device refreshes and displays the second image frame at the picture refreshing moment corresponding to the predetermined frame rate, so that the second image frame is displayed in advance.

In addition, in this embodiment of this application, the electronic device refreshes and displays the second image frame only at a picture refreshing moment between the third vertical synchronization signal (HW_VSYNC signal) and the fourth vertical synchronization signal (HW_VSYNC signal), to ensure that the second image frame can be refreshed and displayed in a synchronization period TZ of the corresponding third vertical synchronization signal (HW_VSYNC signal), so that an image frame can be displayed in a synchronization period TZ in which a frame loss originally occurs.

It can be learned that, although display of the second image frame is slightly delayed in comparison with that a case of no frame loss, the second image frame is displayed in advance in comparison with refreshing and display at a next vertical synchronization signal. Therefore, overall, a time by which display of the second image frame is delayed is shortened, and a time in which a picture is unsmooth is reduced, to reduce smoothness of picture display as soon as possible, and reduce impact exerted by the frame loss.

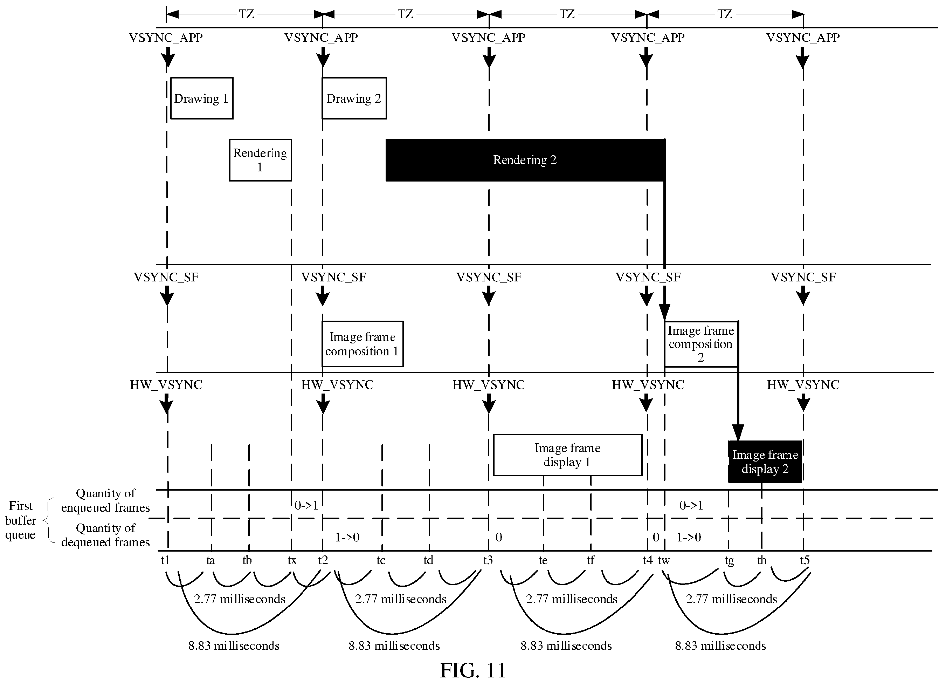

For example, as shown in FIG. 11, a refreshing and display procedure in this embodiment of this application is described by using an example in which the frame rate of the display is 120 HZ and the predetermined frame rate is 360 HZ.

As shown in FIG. 11, if the frame rate of the display of the electronic device is 120 HZ, original picture refreshing moments are a moment t1, a moment t2, a moment t3, a moment t4, and a moment t5 in FIG. 11. A time interval between the picture refreshing moments at 120 HZ is 8.83 milliseconds. Based on a normal refreshing and display procedure, because the first moment is after the moment t4, an image frame 2 (the second image frame) cannot be refreshed and displayed at the moment t4, and the image frame 2 (the second image frame) is delayed by 8.83 milliseconds, and is refreshed and displayed until the moment t5 (Image frame display 2 shown in FIG. 9).

However, in this embodiment of this application, if determining that the first moment is after the moment t4, the electronic device determines the new picture refreshing moment based on the predetermined frame rate 360 HZ. As shown in FIG. 11, the moment t1, a moment ta, a moment tb, the moment t2, a moment tc, a moment td, the moment t3, a moment te, a moment tf, the moment t4, a moment tg, a moment th, the moment t5, and the like are all picture refreshing moments at 360 HZ. It may be understood that a specific quantity of new picture refreshing moments is determined based on the predetermined frame rate. FIG. 11 shows merely an example. This is not limited. In addition, these picture refreshing moments are picture refreshing moments at 360 HZ, and therefore, a time interval between these picture refreshing moments is 1/360=0.00277 seconds=2.77 milliseconds.

Therefore, a corresponding picture refreshing moment, for example, the moment tg and the moment th in FIG. 11, is also added between the moment t4 (the third vertical synchronization signal) and the moment t5 (the fourth vertical synchronization signal).

Further, if the first moment is after the moment t4, the electronic device misses responding to the third vertical synchronization signal (HW_VSYNC signal) corresponding to the moment t4 and therefore, does not refresh or display the image frame 2 (for example, the second image frame). In this embodiment of this application, the electronic device may refresh and display the image frame 2 (for example, the second image frame) against at the moment tg. In this case, although display of the image frame 2 (for example, the second image frame) is delayed by tg-t4 milliseconds, display can be t5-tg milliseconds earlier than display at the moment t5.

For example, at 360 HZ, the image frame 2 (for example, the second image frame) can be displayed as early as approximately 2.7 ms after the moment t4, and in comparison with a case in which the image frame 2 (for example, the second image frame) is not displayed in advance and is displayed at the moment t5, in this case, display of the image frame 2 (for example, the second image frame) can be advanced by a maximum of approximately 5.4 ms, to reduce impact exerted by a frame loss.

It should be noted that, in this embodiment of this application, adding the new picture refreshing moment based on the predetermined frame rate does not change an original frame rate of the display. It may be understood that, in this embodiment of this application, after the lost second image frame is displayed in advance, the electronic device still performs a drawing, rendering, composition, and refreshing and display procedure at the original frame rate (namely, the screen refresh rate) of the display. For example, the frame rate of the display is always 120 HZ, and does not change to 360 HZ.

In some embodiments, in addition to that the second image frame cannot be successfully refreshed and displayed because the first moment is after the third vertical synchronization signal (HW_VSYNC signal) (for example, the first moment tw is after the moment t4), the second image frame cannot be successfully refreshed and displayed in the synchronization period TZ of the third vertical synchronization signal (HW_VSYNC signal) possibly because the third vertical synchronization signal (HW_VSYNC signal) is missed due to timeout of layer composition performed by a compositor thread on a layer.

In other words, if the first moment is before the third vertical synchronization signal (HW_VSYNC signal), but a second moment at which the electronic device buffers the second image frame in the second buffer queue is after the third vertical synchronization signal (HW_VSYNC signal), the third vertical synchronization signal (HW_VSYNC signal) is missed, and the second image frame cannot be successfully refreshed and displayed in the synchronization period TZ of the third vertical synchronization signal (HW_VSYNC signal).

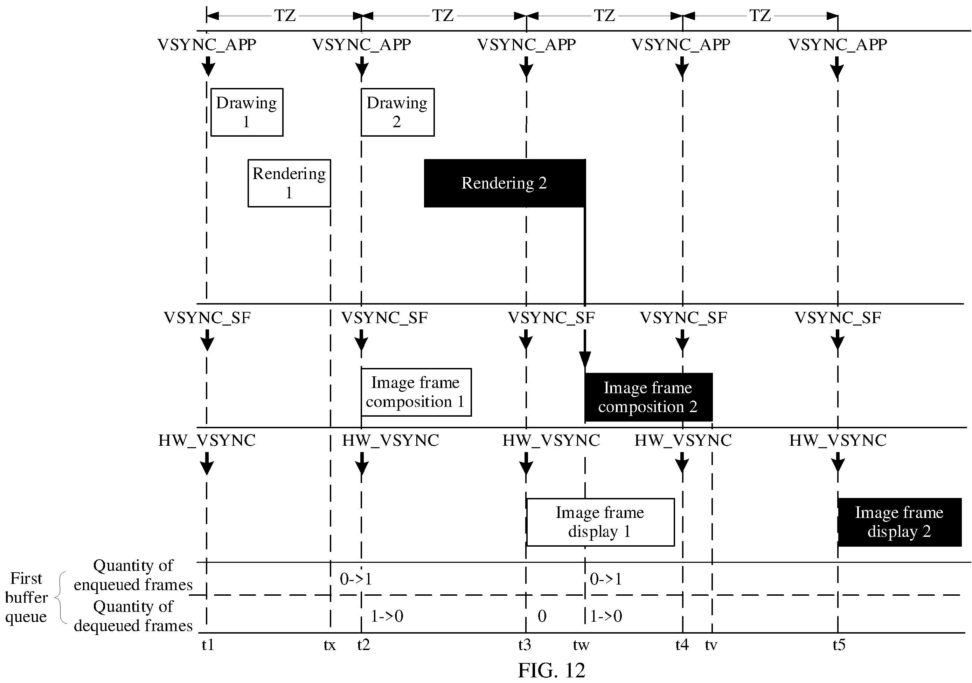

As shown in FIG. 12, the electronic device buffers a layer 2 (the first layer) in a first buffer queue at the moment tw (the first moment) before the moment t4. The electronic device reads the layer 2 (the first layer) from the first buffer queue at the moment tw (the first moment), and performs "Image frame composition 2", to obtain the image frame 2 (the second image frame).

However, in this case, the compositor thread completes layer composition and buffering of the image frame 2 (the second image frame) until a moment tv (the second moment). However, if the moment tv (the second moment) is after the moment t4, the third vertical synchronization signal (HW_VSYNC signal) at the moment t4 is also missed, and consequently, the image frame 2 (the second image frame) is delayed to be refreshed and displayed at the moment t5. In this case, the image frame 2 (the second image frame) is not successfully displayed at the moment t4, and consequently, the frame loss cannot be avoided.

To reduce impact exerted by the frame loss caused by timeout of composition by the compositor thread, in this embodiment of this application, when the first moment is before the third vertical synchronization signal (HW_VSYNC signal), but the second moment (namely, the moment at which the electronic device buffers the second image frame in the second buffer queue) is after the third vertical synchronization signal (HW_VSYNC signal), the new picture refreshing moment may also be determined based on the predetermined frame rate. Further, the electronic device refreshes and displays the second image frame in the second buffer queue at the new picture refreshing moment.

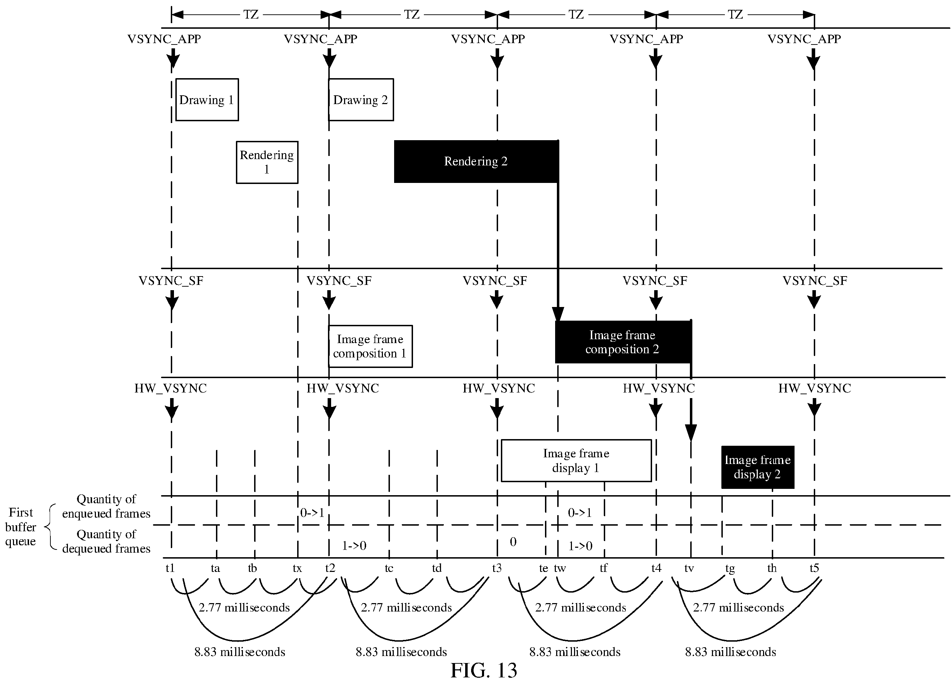

For example, as shown in FIG. 13, the electronic device reads the layer 2 (the first layer) from the first buffer queue at the moment tw (the first moment), performs "Image frame composition 2", obtains the image frame 2 (the second image frame) at the moment tv (the second moment), and buffers the image frame 2 in the second buffer queue. In this case, although the electronic device misses the third vertical synchronization signal (HW_VSYNC signal) at the moment t4, the electronic device may refresh the display the image frame 2 (the second image frame) at the moment tg (the picture refreshing moment). Therefore, the electronic device refreshes and displays the image frame 2 (the second image frame) in advance at the moment tg (the picture refreshing moment), to reduce impact exerted by the frame loss.

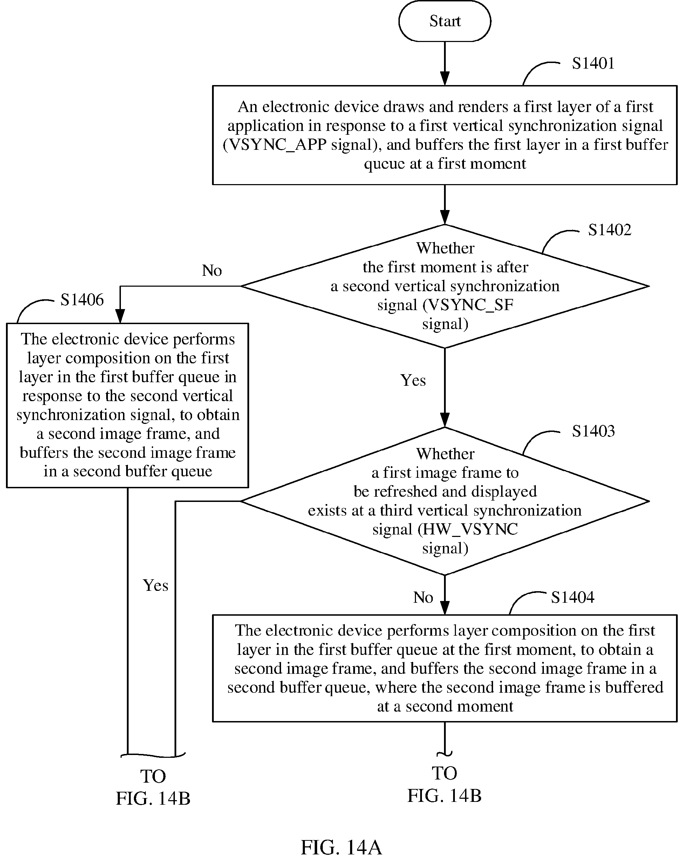

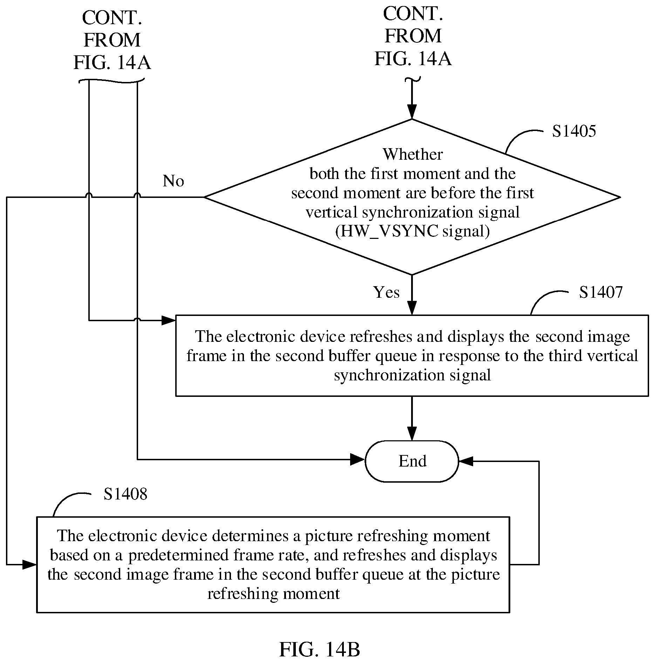

As shown in FIG. 14A and FIG. 14B, for a case in which a first moment is before a third vertical synchronization signal (HW_VSYNC signal), but a second moment is after the third vertical synchronization signal (HW_VSYNC signal) in an embodiment of this application, this embodiment of this application shows a flowchart of another vertical synchronization signal-based image processing method, including steps S1401-S1408.

It may be understood that, in this embodiment of this application, this case is similar to a case in which the first moment is after the third vertical synchronization signal (HW_VSYNC signal), and processing principles thereof are the same. Therefore, for specific implementations of steps in FIG. 14A and FIG. 14B, refer to specific implementations of steps in FIG. 7 and FIG. 10A and FIG. 10B. Details are not described in this embodiment of this application.

In some embodiments, an electronic device may determine, based on a predetermined frame rate, a plurality of picture refreshing moments for refreshing and displaying a second image frame. For example, a moment tg and a moment th in FIG. 11 and FIG. 13. In this embodiment of this application, for a time sequence of picture refreshing moments, a 1^{st} picture refreshing moment is referred to as a first refreshing moment, and at least one picture refreshing moment after the 1^{st} picture refreshing moment is referred to as a second refreshing moment.

The first refreshing moment and the at least one second refreshing moment are not determined by changing a frame rate of a display, but are determined based on the predetermined frame rate. Therefore, the electronic device may unsuccessfully perform refreshing and display. Generally, refreshing and display succeed at the first refreshing moment. However, to ensure as much as possible that the second image frame is successfully refreshed and displayed in advance, in this embodiment of this application, the second image frame may be refresh and display at all picture refreshing moments (including the first refreshing moment and the second refreshing moment) in a traversal manner.

Specifically, the electronic device first refreshes and displays the second image frame in the second buffer queue in advance at the first refreshing moment in a time sequence. If the second image frame is successfully refreshed and displayed at the first refreshing moment, the electronic device stops refreshing and displaying the second image frame. If the second image frame is unsuccessfully refreshed and displayed at the first refreshing moment, the electronic device sequentially refreshes and displays, in a traversal manner in a time sequence, the second image frame in advance at all second refreshing moments, until the second image frame is successfully refreshed and displayed. In other words, in a process of traversing the second refreshing moments, once the electronic device successfully refreshes and displays the second image frame at a second refreshing moment, it represents that the second image frame is successfully displayed in advance, and the electronic device ends a procedure of refreshing and displaying the second image frame in advance, in other words, stops traversing.

Alternatively, the electronic device may stop traversing after all picture refreshing moments are traversed. For example, FIG. 11 is used as an example. To be specific, if the electronic device unsuccessfully refreshes and displays the second image frame at both a moment tg and a moment th, the electronic device stops traversing, and further refreshes and displays the second image frame when a third vertical synchronization signal (HW_VSYNC signal) at a moment t5 arrives.

Therefore, in this embodiment of this application, the second image frame is refreshed and displayed by traversing the picture refreshing moments, to ensure as much as possible that the second image frame is successfully refreshed and displayed.

In some embodiments, a specific period of processing time is required for a compositor thread to perform layer composition. Therefore, to avoid a case in which the compositor thread cannot complete image frame composition in a timely manner before the third vertical synchronization signal (HW_VSYNC signal) arrives,

in this embodiment of this application, when the first moment is before a second vertical synchronization signal (VSYNC_SF signal), but a time difference between the first moment and the second vertical synchronization signal is less than or equal to a preset time threshold, it is considered that the first moment is after the second vertical synchronization signal. The preset time threshold may be set based on experience and a composition time actually required by the compositor thread. For example, the preset time threshold may be 1 millisecond or 2 milliseconds.

2 milliseconds is used as an example. To be specific, in addition to the first moment after the second vertical synchronization signal (VSYNC_SF signal), first moments within 2 milliseconds before the second vertical synchronization signal (VSYNC_SF signal) are all considered as first moments after the second vertical synchronization signal (VSYNC_SF signal). For example, a moment of the second vertical synchronization signal (VSYNC_SF signal) is a 5^{th} millisecond. Then, all first moments after a 3^{rd} millisecond are all first moments after the second vertical synchronization signal (VSYNC_SF signal) at the 5^{th} millisecond.

In some embodiments, generally, when no abnormality (for example, no frame loss) occurs, a rate at which a display driver reads an image frame for display is also consistent with a rate at which generation and consumption occur. It may be understood that a consumer (the compositor thread) composes one image frame every VSYNC period (for example, the foregoing synchronization period TZ), and buffers the image frame in the second buffer queue, and the display driver extracts one image frame from the second buffer queue every VSYNC period (for example, the foregoing synchronization period TZ), and refreshes and displays the image frame on the display.

Therefore, for whether a first image frame to be refreshed and displayed exists at the third vertical synchronization signal (HW_VSYNC signal) in the foregoing embodiments, in addition to a case in which the corresponding second vertical synchronization signal (VSYNC_SF signal) is responded to with a case in which the first image frame being composed exists, there may be another case.

That is, currently (namely, at the first moment), the second buffer queue includes the first image frame that may be refreshed and displayed. At the first moment, if the second buffer queue includes a first image frame waiting to be refreshed and displayed, it means that when the third vertical synchronization signal (HW_VSYNC signal) arrives, in response to the third vertical synchronization signal (HW_VSYNC signal), the electronic device necessarily first refreshes and displays the first image frame waiting to be displayed in the second buffer queue.

Therefore, in this case, a first image frame that is being composed or that waits to be composed cannot be refreshed and displayed when the third vertical synchronization signal (HW_VSYNC signal) arrives. Therefore, in this embodiment of this application, this case is also considered that the first image frame that may be refreshed exists at the third vertical synchronization signal (HW_VSYNC signal).

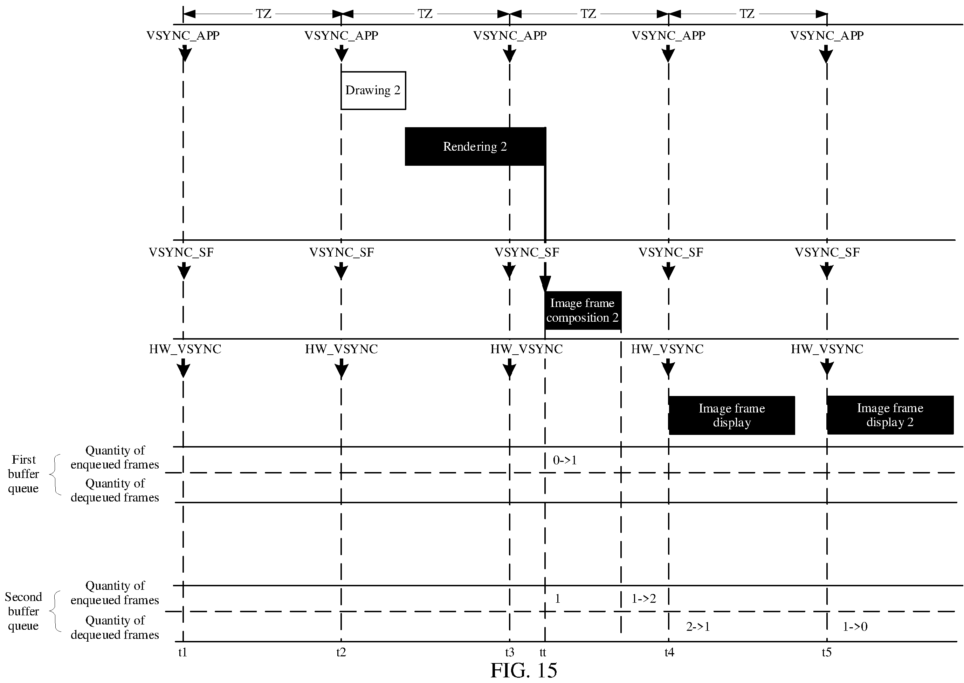

For example, as shown in FIG. 15, if the electronic device completes drawing and rendering of a layer 1 (a first layer) until a moment tt (the first moment) after a moment t3, and buffers a layer 2 (the first layer) in the first buffer queue, that is, processing the layer 1 (the first layer) by the electronic device times out, a quantity of image frames in the first buffer queue increases from 0 to 1 (that is, 0->1).

In addition, if the second buffer queue currently includes the first image frame that may be refreshed and displayed, that is, the second buffer queue stores one first image frame (shown as "1" in the figure) at the moment tt,
if the electronic device triggers immediate composition of the layer 2 (the first layer) to obtain the image frame 2 (the second image frame), the image frame 2 (the second image frame) is buffered in the second buffer queue. In this case, a quantity of image frames in the second buffer queue increases from 1 to 2 (that is, 1->2).

Further, when a third vertical synchronization signal (HW_VSYNC signal) at a moment t4 arrives, if the display driver reads an image frame from the second buffer queue for refreshing and display, based on a first-in first-out characteristic of a queue, a dequeuing sequence of the image frame 2 (the second image frame) is after that of the first image frame, and the display driver necessarily reads the first image frame rather than the immediately composed image frame 2 (the second image frame). In this case, the quantity of image frames in the second buffer queue decreases from 2 to 1 (that is, 2->1) at the moment t4.

However, the image frame 2 (the second image frame) in the second buffer queue may be refreshed and displayed at the moment t5. That is, the quantity of image frames in the second buffer queue decreases from 1 to 0 (that is, 1->0) at the moment t5.

It can be learned that in this case, even if the electronic device immediately composes the image frame 2 (the second image frame), the image frame 2 (the second image frame) is also not displayed at the moment t4. The second image frame is still in a lost state. Therefore, when another first image frame waiting to be refreshed and displayed is buffered in the second buffer queue at the first moment (the moment tt), in this embodiment of this application, it is also considered that the first image frame that may be refreshed exists at the third vertical synchronization signal (HW_VSYNC signal).

In conclusion, to determine whether the first image frame to be refreshed and displayed exists at the third vertical synchronization signal (HW_VSYNC signal), whether layer composition is performed on another layer of another application in response to the second vertical synchronization signal (VSYNC_SF signal) needs to be determined. In addition, whether the first image frame to be displayed exists in the second buffer queue further needs to be determined.

Only when layer composition is not performed (that is, no composition is performed on a layer of any other application) in response to the second vertical synchronization signal (VSYNC_SF signal), and the first image frame to be refreshed and displayed does not exist in the second buffer queue, it can be determined that the first image frame to be refreshed and displayed does not exist at the third vertical synchronization signal (HW_VSYNC signal).

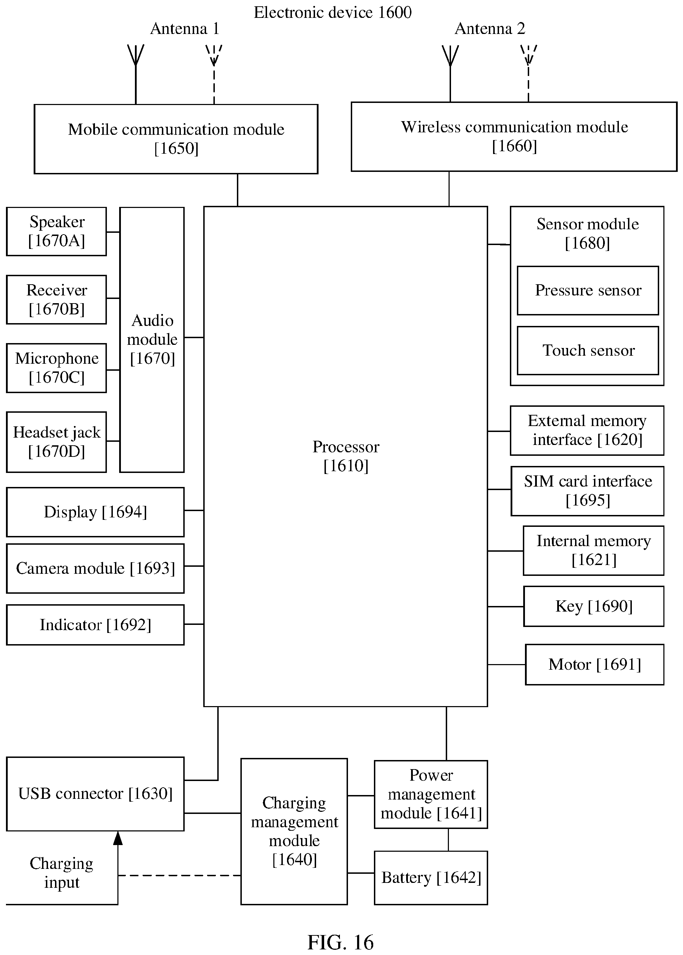

FIG. 16 is a schematic structural diagram of the foregoing electronic device.

An electronic device 1600 may include a processor 1610, an external memory interface 1620, an internal memory 1621, a universal serial bus (universal serial bus, USB) connector 1630, a charging management module 1640, a power management module 1641, a battery 1642, an antenna 1, an antenna 2, a mobile communication module 1650, a wireless communication module 1660, an audio module 1670, a speaker 1670A, a receiver 1670B, a microphone 1670C, a headset jack 1670D, a sensor module 1680, a key 1690, a motor 1691, an indicator 1692, a camera module 1693, a display 1694, a subscriber identification module (subscriber identification module, SIM) card interface 1695, and the like.

The sensor module 1680 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of this application constitutes no specific limitation on the electronic device 1600. In some other embodiments of this application, the electronic device 1600 may include more or fewer components than those shown in the figure, or some merged components, or some split components, or different component arrangements. The illustrated components may be implemented by using hardware, software, or a combination of software and hardware.

The processor 1610 may include one or more processing units. For example, the processor 1610 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors. The processor 1610 may generate an operation control signal based on instruction operation code and a timing signal, to implement control on instruction fetching and execution.

The processor 1610 may be further provided with a memory. The memory is configured to store instructions and data. In some embodiments, the memory in the processor 1610 may be a cache. The memory may store instructions or data used or frequently used by the processor 1610. If the processor 1610 needs to use the instructions or data, the instructions or data may be directly invoked from the memory. This avoids repeated access, and reduces the waiting time of the processor 1610, so that the system efficiency is improved.

In some embodiments, the processor 1610 may include one or more interfaces. The interface may be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like. The processor 1610 may be connected to modules such as the touch sensor, the audio module, the wireless communication module, the display, and the camera module through at least one of the foregoing interfaces.

It may be understood that the interface connection relationship between the modules shown in this embodiment of this application is merely an example, and does not constitute a limitation on the structure of the electronic device 1600. In some other embodiments of this application, different interface connection manners in the foregoing embodiments or a combination of a plurality of interface connection manners may alternatively be used for the electronic device 1600.

The external memory interface 1620 may be configured to be connected to an external storage card, for example, a Micro SD card, to expand a storage capability of the electronic device 1600. The external storage card communicates with the processor 1610 through the external memory interface 1620, to implement a data storage function. For example, files such as music or videos are stored in the external memory card. Alternatively, a file such as music or a video is transmitted from the electronic device to the external memory card.

The internal memory 1621 may be configured to store computer-executable program code, and the computer-executable program code includes instructions. The internal memory 1621 may include a program storage area and a data storage area. The program storage area may store an operating system, an application required by at least one function (for example, a sound play function or an image play function), and the like. The data storage area may store data (for example, audio data and an address book) and the like created during use of the electronic device 1600. In addition, the internal memory 1621 may include a high-speed random access memory, and may also include a non-volatile memory, for example, at least one magnetic disk storage device, flash memory device, universal flash storage (universal flash storage, UFS) or the like. The processor 1610 performs various functional methods or data processing of the electronic device 1600 by running the instructions stored in the internal memory 1621 and/or instructions stored in the memory disposed in the processor.

The USB connector 1630 is an interface that conforms to a USB standard specification, may be configured to connect the electronic device 1600 and a peripheral device, and may be specifically a Mini USB connector, a Micro USB connector, a USB Type C connector, or the like. The USB connector 1630 may be configured to be connected to a charger, so that the charger charges the electronic device 1600; or may be configured to be connected to another electronic device, to implement data transmission between the electronic device 1600 and another electronic device; or may be configured to be connected to a headset, to output, through the headset, audio stored in the electronic device. The connector may be further configured to be connected to the another electronic device such as a VR device. In some embodiments, a standard specification of the universal serial bus may be USB1.x, USB2.0, USB3.x, and USB4.

The charging management module 1640 is configured to receive a charging input from the charger. When charging the battery 1642, the charging management module 1640 may further supply power to the electronic device through the power management module 1641.

The power management module 1641 is configured to connect the battery 1642, the charging management module 1640 and the processor 1610. The power management module 1641 receives an input from the battery 1642 and/or the charging management module 1640, and supplies power to the processor 1610, the internal memory 1621, the display 1694, the camera module 1693, the wireless communication module 1660, and the like. In some other embodiments, the power management module 1641 may also be arranged in the processor 1610. In some other embodiments, the power management module 1641 and the charging management module 1640 may alternatively be disposed in a same component.

A wireless communication function of the electronic device 1600 may be implemented through the antenna 1, the antenna 2, the mobile communication module 1650, the wireless communication module 1660, a modem processor, a baseband processor, and the like.

The antenna 1 and the antenna 2 are configured to transmit and receive electromagnetic wave signals. Each antenna in the electronic device 1600 may be configured to cover one or more communication frequency bands. Different antennas may also be multiplexed to improve antenna utilization. For example, the antenna 1 may be multiplexed into a diversity antenna of a wireless local area network. In some other embodiments, the antenna may be used in combination with a tuning switch.

The mobile communication module 1650 may provide a solution applied to the electronic device 1600 for wireless communication such as 2G/3G/4G/5G. The mobile communication module 1650 may include at least one filter, a switch, a power amplifier, a low noise amplifier (low noise amplifier, LNA), and the like. The mobile communication module 1650 may receive an electromagnetic wave through the antenna 1, perform processing such as filtering and amplification on the received electromagnetic wave, and transmit the processed electromagnetic wave to the modem processor for demodulation. The mobile communication module 1650 may further amplify a signal modulated by the modem processor and convert, through the antenna 1, the signal into electromagnetic waves for radiation.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. The demodulator then transmits a demodulated low-frequency baseband signal to the baseband processor for processing. The low-frequency baseband signal is processed by the baseband processor and then transmitted to the application processor. The application processor outputs a sound signal through an audio device (not limited to the speaker 1670A, the receiver 1670B, or the like), or displays an image or a video through the display 1694.

The wireless communication module 1660 may provide a solution to wireless communication applied to the electronic device 1600, for example, a wireless local area network (wireless local area networks, WLAN) (for example, a wireless fidelity (wireless fidelity, Wi-Fi) network), Bluetooth (bluetooth, BT), a Bluetooth low energy (bluetooth low energy, BLE), an ultra wide band (ultra wide band, UWB), a global navigation satellite system (global navigation satellite system, GNSS), frequency modulation (frequency modulation, FM), near field communication (near field communication, NFC), and an infrared (infrared, IR) technology. The wireless communication module 1660 may be one or more components integrated with at least one communication processing module. The wireless communication module 1660 receives an electromagnetic wave through an antenna 2, performs frequency modulation and filtering processing on an electromagnetic wave signal, and sends a processed signal to the processor 1610. The wireless communication module 1660 may further receive a to-be-sent signal from the processor 1610, perform frequency modulation and amplification on the signal, and convert the signal into an electromagnetic wave for radiation through the antenna 2.

In some embodiments, in the electronic device 1600, the antenna 1 is coupled to the mobile communication module 1650, and the antenna 2 is coupled to the wireless communication module 1660, so that the electronic device 1600 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like.

The electronic device 1600 may implement a display function by using the GPU, the display 1694, the application processor, and the like. The GPU is a microprocessor for image processing, and connects the display 1694 and the application processor. The GPU is configured to perform mathematical and geometric computation, and render an image. The processor 1610 may include one or more GPUs, and the GPU executes program instructions to generate or change displayed information.

The display 1694 is configured to display an image, a video, and the like. The display 1694 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLED, a Micro-OLED, a quantum dot light emitting diode (quantum dot light emitting diodes, QLED), or the like. In some embodiments, the electronic device 1600 may include one or more displays 1694.

The electronic device 1600 may implement a photographing function through the camera module 1693, the ISP, the video codec, the GPU, the display 1694, the application processor AP, the neural-network processing unit NPU, and the like. The camera module 1693 may be configured to collect color image data and depth data of a captured object. The ISP may be configured to process the color image data collected by the camera module 1693. The digital signal processor may further process another digital signal in addition to processing a digital image signal. The video codec is configured to compress or decompress a digital video. The electronic device 1600 may support one or more types of video codecs. In this way, the electronic device 1600 may play or record videos in a plurality of encoding formats such as moving picture experts group (moving picture experts group, MPEG) 1, MPEG2, MPEG3, and MPEG4.

In some embodiments, the CPU, the GPU, or the NPU in the processor 1610 may process the color image data and the depth data collected by the camera module 1693. The NPU is a neural-network (neural-network, NN) computing processor, and quickly processes input information with reference to a structure of a biological neural network, for example, a transfer mode between human brain neurons, and may further continuously perform self-learning. Applications such as intelligent recognition of the electronic device 1600, for example, image recognition, face recognition, speech recognition, and text understanding, may be implemented through the NPU.

In some embodiments, the electronic device 1600 may include one or more camera modules 1693. Specifically, the electronic device 1600 may include one front-facing camera module 1693 and one rear-facing camera module 1693. The camera module 1693 may include a color camera module and a 3D sensing module. The camera module 1693 may further include two or more cameras.

The electronic device 1600 may implement an audio function by using the audio module 1670, the speaker 1670A, the receiver 1670B, the microphone 1670C, the headset jack 1670D, the application processor, and the like. The audio function includes, for example, music playing and sound recording.

The audio module 1670 is configured to convert digital audio information into analog audio signal output, and is also configured to convert analog audio input into a digital audio signal. The audio module 1670 may be further configured to encode and decode an audio signal. The speaker 1670A, also referred to as a "loudspeaker", is configured to convert an audio electrical audio signal into a sound signal. The receiver 1670B, also referred to as an "earpiece", is configured to convert an audio electrical audio signal into a sound signal. The microphone 1670C, also referred to as a "mic" and a "mike", is configured to convert a sound signal into an electrical signal. The headset jack 1670D is configured to be connected to a wired headset.

The pressure sensor is configured to sense a pressure signal, and may convert the pressure signal into an electrical signal. In some embodiments, the pressure sensor may be disposed on the display 1694. There are many types of pressure sensors such as a resistive pressure sensor, an inductive pressure sensor, and a capacitive pressure sensor. The capacitive pressure sensor may include at least two parallel plates having a conductive material. When a force is applied to the pressure sensor, a capacitance between electrodes changes. The electronic device 1600 determines pressure intensity based on a capacitance change. When a touch operation is performed on the display 1694, the electronic device 1600 detects intensity of the touch operation through the pressure sensor. The electronic device 1600 may also calculate a touch position based on a detection signal of the pressure sensor. In some embodiments, touch operations that are performed in a same touch position but have different touch operation intensity may correspond to different operation instructions. For example, when a touch operation whose touch operation strength is less than a first pressure threshold acts on a Messages application icon, an instruction for viewing the SMS message is executed. When a touch operation whose touch operation strength is greater than or equal to a first pressure threshold is performed on the Messages application icon, an instruction for creating a new SMS message is executed.

The touch sensor is also referred to as a "touch device". The touch sensor may be disposed in the display 1694. The touch sensor and the display 1694 constitute a touchscreen, also referred to as a "touch screen". The touch sensor is configured to detect a touch operation performed on or near the touch sensor. The touch sensor may transmit the detected touch operation to the application processor, to determine a touch event type. A visual output related to a touch operation may be provided on the display 1694. In some other embodiments, the touch sensor may be alternatively disposed on a surface of the electronic device 1600, and is located at a location different from that of the display 1694.

The key 1690 may include a power key, a volume key, and the like. The key 1690 may be a mechanical key, or a touch-type key. The electronic device 1600 may receive a key input, and generate a key signal input related to user setting and function control of the electronic device 1600. The motor 1691 may generate a vibration prompt. The motor 1691 may be configured to provide an incoming call vibration prompt, or may be configured to provide a touch vibration feedback. The indicator 1692 may be an indicator light, and may be configured to indicate a charging status or a power change, or may be configured to indicate a message, a missed call, a notification, or the like. The SIM card interface 1695 is configured to connect to a SIM card. The SIM card may be inserted into the SIM card interface 1695 or pulled out from the SIM card interface 1695, to implement contact with or separation from the electronic device 1600. The electronic device 1600 may support one or more SIM card interfaces. The SIM card interface 1695 may support a Nano SIM card, a Micro SIM card, a SIM card, and the like.

Another embodiment of this application provides an electronic device, including a display, one or more processors, and a memory. The display and the memory are separately coupled to the processor. The memory stores one or more pieces of computer program code, and the computer program code includes computer instructions. When the processor executes the computer instructions, the electronic device is enabled to implement the vertical synchronization signal-based image processing method recorded in any one of the foregoing embodiments.

Another embodiment of this application provides a computer-readable storage medium. The computer-readable storage medium stores a computer program, and when the computer program is executed by a processor in an electronic device, the electronic device is enabled to implement the vertical synchronization signal-based image processing method recorded in any one of the foregoing embodiments.

An embodiment of this application further provides a computer program product. When the computer program product runs on a computer, the computer is enabled to perform the functions or steps in the foregoing method embodiments.

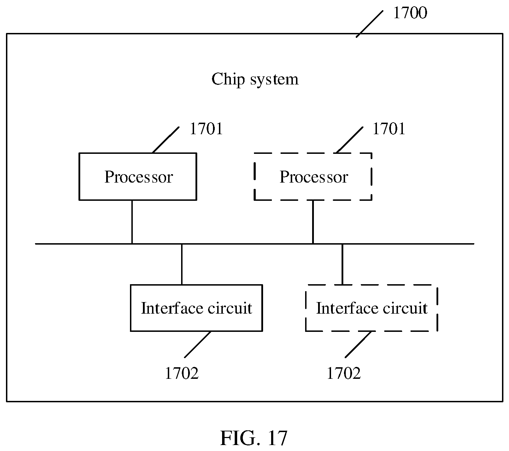

An embodiment of this application further provides a chip system. As shown in FIG. 17, a chip system 1700 includes at least one processor 1701 and at least one interface circuit 1702. The processor 1701 and the interface circuit 1702 can be connected to each other through a line. For example, the interface circuit 1702 may be configured to receive a signal from another apparatus (for example, a memory of a computer). For another example, the interface circuit 1702 may be configured to transmit a signal to another apparatus (for example, the processor 1701).

For example, the interface circuit 1702 may read instructions stored in the memory and send the instructions to the processor 1701. When the instructions are executed by the processor 1701, the computer is enabled to perform the steps in the foregoing embodiments. Certainly, the chip system may further include another discrete device. This is not specifically limited in this embodiment of this application.

According to the descriptions of the foregoing implementations, a person skilled in the art may clearly understand that, for the purpose of convenient and brief description, division into the foregoing functional modules is only used as an example for description. In actual applications, the foregoing functions may be allocated to and completed by different functional modules according to a requirement. That is, an inner structure of an apparatus is divided into different functional modules to complete all or some of the functions described above.

In the several embodiments provided in this application, it should be understood that the disclosed apparatus and method may be implemented in another manner. For example, the described apparatus embodiment is merely an example. For example, division of modules or units is merely logical function division and may be other division during actual implementation. For example, a plurality of units or components may be combined or integrated into another apparatus, or some features may be ignored or not performed. In addition, the displayed or discussed mutual coupling or direct coupling or communication connection may be implemented with some interfaces. Indirect coupling or communication connection between the apparatuses or units may be implemented in an electronic way, a mechanical way, or other ways.

The units described as separate parts may or may not be physically separated, and parts displayed as units may or may not be one or a plurality of physical units, that is, may be located at one position, or may be distributed to a plurality of different places. Some or all of the units may be selected based on actual needs, so as to achieve the objective of the solution of the embodiments.

In addition, the functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The storage medium includes: a USB flash disk, a mobile hard disk, a read only memory (read only memory, ROM), a random access memory (random access memory, RAM), a magnetic disk, an optical disc, and other media capable of storing program code.

The foregoing content is only specific implementations of this application, but the protection scope of this application is not limited thereto. Any variation or replacement made within the technical scope disclosed in this application shall fall within the protection scope of this application. Therefore, the protection scope of this application shall be subject to the protection scope of the claims.

## Claims

1. A vertical synchronization signal-based image processing method, applied to an electronic device, wherein the method comprises:
drawing and rendering a first layer of a first application in response to a first vertical synchronization signal, and buffering the first layer in a first buffer queue at a first moment; and
if the first moment is after a second vertical synchronization signal, and a first image frame to be refreshed and displayed does not exist at a third vertical synchronization signal, performing layer composition on the first layer in the first buffer queue at the first moment, to obtain a second image frame, and buffering the second image frame in a second buffer queue, wherein
the second vertical synchronization signal is used to trigger layer composition, and the second vertical synchronization signal is after the first vertical synchronization signal and is separated from the first vertical synchronization signal by a first preset period; and
the third vertical synchronization signal is used to trigger image frame refreshing and displaying, and the third vertical synchronization signal is after the second vertical synchronization signal and is separated from the second vertical synchronization signal by a second preset period.

2. The method according to claim 1, wherein the method further comprises:
if the first moment is before the third vertical synchronization signal, refreshing and displaying the second image frame in the second buffer queue in response to the third vertical synchronization signal.

3. The method according to claim 2, wherein the method further comprises:
refreshing and displaying the second image frame in the second buffer queue at a picture refreshing moment if the first moment is after the third vertical synchronization signal, wherein the picture refreshing moment is after the third vertical synchronization signal and before a fourth vertical synchronization signal, the fourth vertical synchronization signal is used to trigger image frame display, and the fourth vertical synchronization signal is after the third vertical synchronization signal and is separated from the third vertical synchronization signal by one synchronization period.

4. The method according to claim 3, wherein before the refreshing and displaying the second image frame in the second buffer queue at a picture refreshing moment, the method further comprises:
determining the picture refreshing moment based on a predetermined frame rate, wherein the predetermined frame rate is greater than a frame rate of a display of the electronic device.

5. The method according to claim 1 or 2, wherein the second image frame is buffered in the second buffer queue at a second moment, and the method further comprises:
refreshing and displaying the second image frame in the second buffer queue at a picture refreshing moment if the second moment is after the third vertical synchronization signal, wherein the picture refreshing moment is after the third vertical synchronization signal and before a fourth vertical synchronization signal, and the picture refreshing moment is determined based on a predetermined frame rate.

6. The method according to any one of claims 2-5, wherein the picture refreshing moment comprises a first refreshing moment and at least one second refreshing moment, and the second refreshing moment is after the first refreshing moment; and
the refreshing and displaying the second image frame in the second buffer queue at a picture refreshing moment comprises:
refreshing and displaying the second image frame in the second buffer queue at the 1^{st} picture refreshing moment; and
if refreshing and display fail at the 1^{st} picture refreshing moment, traversing the at least one second picture refreshing moment in a time sequence, and refreshing and displaying the second image frame at each second picture refreshing moment, until the refreshing and display succeed or traversal is completed.

7. The method according to any one of claims 1-6, wherein the method further comprises:
if layer composition is not performed in response to the second vertical synchronization signal, and the first image frame to be refreshed and displayed does not exist in the second buffer queue at the first moment, determining that the first image frame to be refreshed and displayed does not exist at the third vertical synchronization signal.

8. The method according to any one of claims 1-7, wherein the method further comprises:
if the first moment is before the second vertical synchronization signal, performing layer composition on the first layer in the first buffer queue in response to the second vertical synchronization signal, to obtain the second image frame, and buffering the second image frame in the second buffer queue; and
refreshing and displaying the second image frame in the second buffer queue in response to the third vertical synchronization signal.

9. The method according to any one of claims 1-8, wherein the method further comprises:
if the first moment is before the second vertical synchronization signal, and a time difference between the first moment and the second vertical synchronization signal is less than or equal to a preset time threshold, determining that the first moment is after the second vertical synchronization signal.

10. The method according to any one of claims 1-9, wherein the first preset period is equal to one synchronization period, and the second preset period is equal to one synchronization period.

11. An electronic device, comprising a display, one or more processors, and a memory, wherein the display and the memory are respectively coupled to the processor; and
the memory stores one or more pieces of computer program code, the computer program code comprises computer instructions, and when the processor executes the computer instructions, the electronic device is enabled to perform the vertical synchronization signal-based image processing method according to any one of claims 1-10.

12. A computer-readable storage medium, wherein the computer-readable storage medium stores a computer program, and when the computer program is executed by a processor of an electronic device, the electronic device is enabled to perform the vertical synchronization signal-based image processing method according to any one of claims 1-10.
